# EUROPÄISCHE PATENTSCHRIFT

(11) **EP 1 128 106 B1**
(45) Veröffentlichungstag und Bekanntmachung des Hinweises auf die Patenterteilung: **18.01.2006**
(21) Anmeldenummer: 01100060.1
(22) Anmeldetag: 10.01.2001
(51) Int. Cl.: F16K 27/00, F16K 31/06, B60T 8/36, B60T 13/68, B60T 15/18

(54) **Ventileinrichtung für die Vorsteuereinheit eines Bremsdruckmodulators**
Valve device for a pilot unit of a brake pressure modulator
Dispositif de soupape d'unité de pilote d'un modulateur de pression de freinage

(30) Priorität: 26.02.2000 DE 10009116
(43) Veröffentlichungstag der Anmeldung: 29.08.2001
(73) Patentinhaber: WABCO GmbH & CO. OHG, 30453 Hannover (DE)
(72) Erfinder: Frank, Dieter, 30171 Hannover (DE); Homann, Peter, 31535 Neustadt (DE); Kranz, Andreas, Dr., 31515 Wunstorf (DE); Sieker, Armin, 33611 Bielefeld (DE); Meier, Dirk, 30926 Seelze (DE); Schreiber, Gerdt, 30916 Isernhagen (DE); Wolff, Hans-Klaus, 31832 Springe (DE)
(74) Vertreter: Schrödter, Manfred

(56) Entgegenhaltungen:
- EP-A- 0 681 128
- WO-A-99/51901
- DE-A- 3 534 665
- DE-A- 10 003 205
- DE-A- 19 609 222
- DE-A- 19 940 696
- US-A- 5 127 434

## Beschreibung

Die Erfindung betrifft eine Ventileinrichtung für die Vorsteuereinheit eines Bremsdruckmodulators.

Aus der EP-A1-0 893 636, bei der vorwiegend die Verwendung elastischer Mittel zum Zwecke des Toleranz- und Wärmedehnungsausgleiches beschrieben ist, ist ein hydraulisches Magnetventil bekannt, bei dem eine als separate Baueinheit ausgeführte Ventilpatrone [dort electrovanne (1)], welche die Elemente der mechanischen Betätigung enthält, in die Aufnahmeöffnung einer weiteren Baueinheit eingeschoben ist, in welcher die Magnetspule [dort bobine (13)] angeordnet ist.

Bei Stromeinleitung in die Magnetspule wird in dem geschlossenen Magnetkreis, der aus den Teilen mit den dortigen Bezugszeichen (14), (2), (7) und (9) besteht, ein Magnetfeld aufgebaut; dieses Magnetfeld bewirkt, daß eine Kraft auf einen als Magnetanker wirkenden Kern [dort noyan (9)] ausgeübt wird. Diese Kraft wirkt weiter über ein zweites Teil, über einen mit dem Kern fest verbundenen Stößel [dort poussoir (16)] auf eine nicht mit dem Stößel (16) verbundene, also separat eingelegte Kugel [dort bille (17)], welche gegen die Kraft einer Feder [dort resort (22)] von ihrem Dichtsitz [dort siege (18)] abhebt, wodurch der Dichtsitz geöffnet wird. [Im stromlosen Spulenzustand wird wie unten erläutert der Stößel (16) über eine Fixierfeder leicht auf die Kugel gedrückt, da die Feder (22) deutlich stärker ausgelegt ist.]

Mit der Öffnung des Dichtsitzes wird der Verbindungskanal zwischen dem hydraulischen Eingang [dort (20)] und dem hydraulischen Ausgang [dort (21)] geöffnet; bei dem bekannten Magnetventil handelt es sich also um ein stromlos geschlossenes 2/2-Wege-Magnetventil.

Da das bekannte Magnetventil aus mehreren Einzelteilen besteht, ist zur Montage des Magnetventiles eine Anzahl von verschiedenen Arbeitsschritten erforderlich.

An einem als Hydraulikblock ausgebildeten Stützblock (3) befindet sich eine Aussparung, in die die Ventilpatrone eingesetzt wird. Daraufhin wird der Flansch (2) über den mit der Ventilpatrone versehenen Stützblock (3) geschoben und der Flansch (2) wird an dem Stützblock (3) befestigt, wodurch auch die Ventilpatrone durch die konische Erweiterung (6) mit dem Stützblock (3) und dem Flansch (2) befestigt ist. Dadurch wird eine separate Baueinheit Stützblock/Ventilpatrone/Flansch vorgefertigt, die die gesamte Hydraulik umfaßt.

Im Elektrikteil des Magnetventiles wird die separate Spule (13) im Jochtopf (14) zusammen mit den elastischen Blöcken (33) und (34) und der Plastikkarkasse (24) angeordnet. Dann wird das Gummiteil (32) zwischen den Jochtopf (14) und die obere Wand (29) des Ventilgehäuses eingeschoben und die Baugruppe aus Jochtopf mit Spule und den elastischen Blöcken wird eingeschoben, so daß die Spulenanschlüsse durch die Kontaktierungsbohrungen der Rechnerplatine (26) hindurchragen.

Die vorgefertigte Baueinheit Stützblock/Ventilpatrone/Flansch wird nun am Ventilgehäuse angeschraubt, so daß der elastische Block (33) an der Flanschplatte (2) anliegt. Durch diese Verschraubung sind die beteiligten Elemente im Elektrikteil unter Vorspannung gebracht, und abhängig davon ergibt sich eine axiale Längenausrichtung der Spule (13) zum restlichen Aufbau. In dieser Längenausrichtung werden die Anschlüsse der Spule z. B. durch Löten (27) starr mit der Rechnerplatine (26) verbunden, und damit ist die Längenausrichtung fixiert.

Eine Längenfixierung mit Hilfe von elastischen Elementen ist allerdings problematisch, da sie eine Veränderung der Kraftverhältnisse zwischen den kraftgebenden Toleranzausgleichselementen infolge von Temperatureinfluß, Langzeitverhalten von elastischen Elementen [z. B. Setzverhalten von Elastomeren] und Kraftbeaufschlagung durch Massenkräfte infolge von Schwingungen nicht berücksichtigt.

Auch die Montage der Ventilpatrone selbst erfordert mehrere Arbeitsgänge. Zuerst wird der bewegliche Kern (9) mit dem Stößel (16) und der dort nicht näher bezeichneten Fixierfeder in das zur Ankerführung dienende Rohr (11) der Patrone eingeschoben, dann erfolgt die Einschiebung und Befestigung des Innenteiles (7) mit dem Distanzstück (10) über sein oberes Teil (8) mit geringerem Durchmesser. Darauf wird zu dem Innenteil (7) das nicht näher bezeichnete Dichtsitzelement über der dichtenden Kugel (17) eingeschoben, die Kugel selbst hinzugefügt und durch die nicht näher bezeichnete Führung für die Kugel (17) ergänzt. Anschließend ist das Montieren des nicht näher bezeichneten Druckstücks für die Kugel (17) und der dieses Druckstück vorspannenden Feder (22) erforderlich.

Bei einem Einsatz für einen Bremsdruckmodulator müssen neben einem stromlos geschlossenen 2/2-Wege-Magnetventil auch weitere Ventilvarianten, wie ein stromlos offenes 2/2-Wege-Magnetventil oder ein 3/2-Wege-Magnetventil verwendet werden. Für diese Ventilvarianten gibt die vorbekannte Schrift keine Anregungen.

Die Aufgabe der Erfindung besteht also darin, eine für eine pneumatische Vorsteuereinheit eines pneumatischen Bremsdruckmodulators geeignete Ventilpatrone anzugeben, bei der die Montage vereinfacht ist, wobei auf die Verwendung von elastischen Toleranzausgleichselementen verzichtet werden soll.

Diese Aufgabe wird in den Erfindungen nach Patentanspruch 1 und Patentanspruch 15 gelöst; Weiterbildungen und vorteilhafte Ausführungsbeispiele der Erfindung sind in den Unteransprüchen angegeben.

Die Erfindung nach Patentanspruch 1 betrifft die Anordnung eines als Patrone ausgebildeten Magnetventiles in einem Gehäuse mit der zugehörigen Magnetspule; die Erfindung nach Patentanspruch 15 betrifft den konstruktiven Aufbau einer derartigen Magnetventil-Patrone.

Die Erfindung nach Patentanspruch 1 hat den Vorteil, daß die erfindungsgemäße Ventilpatrone vor ihrer Montage als vorprüfbare Baueinheit aufgebaut werden kann, und daß ein Austausch von Ventilpatronen ohne jegliche Justagearbeit erfolgt.

Die Erfindung nach Patentanspruch 15 hat den Vorteil, daß für unterschiedliche Ventil-Typen gleichartige Bauelemente, das heißt gleichartige Magnetanker mit Anker-Rückstelleinrichtung, ein unten erläuterter gleichartiger zweiter Ventilkörper, welcher den Magnetanker mit der Rückstelleinrichtung enthält, und gleichartige Magnetspulen verwendet werden können, wodurch die Fertigungskosten verringert werden.

Die Erfindung wird im folgenden anhand eines Ausführungsbeispiels, das in der Zeichnungen dargestellt ist, näher erläutert.

Es zeigt:
- Fig. 1: eine neuartige pneumatische Schaltung der Vorsteuereinheit für einen Bremsregelkreis des Bremsdruckmodulators mit dem am pneumatischen Ausgang der Vorsteuereinheit angeschlossenen luftmengenverstärkenden Relaisventil;
- Fig. 2: eine andere pneumatische Schaltung für eine Bremsregelkreis-Vorsteuereinheit;
- Fig. 3: die Ventilkonstruktion für eine Vorsteuereinheit nach Fig. 1 in Form eines pneumatischen Ventilblockes;
- Fig. 4: am Beispiel einer herkömmlichen Ventilkonstruktion die Ausführung der Magnetanker und die Art des Magnetanker-Einbaus in eine Magnetspule zur Bildung eines hermetisch dichtenden Ventilsitzes für den nicht bestromtem Magneten und eines nicht hermetisch dichtenden Metall-Metall-Ventilsitzes für den bestromtem Magneten;
- Fig. 5: eine Ventilpatrone als separate Baueinheit und die zu dieser Ventilpatrone gehörenden weiteren Teile des Gehäuses und der Magnetspule, die ebenfalls als separate Bauein- heiten ausgeführt sind, sowie die Montage der Baueinheiten, im Rahmen derer die Magnetspule fixiert wird;
- Fig. 6: die Ventilpatrone und die zugehörigen weiteren Baueinheiten entsprechend Fig. 5 mit einer in Bezug zu Fig. 5 alternativen Fixierung der Magnetspule;
- Fig. 7: auf der Basis der herkömmlichen Ventilkonstruktion nach Fig. 4 den konstruktiven Aufbau einer Ventilpatrone nach Fig. 5 in der Ausführung als 3/2-Wege-Patronen-Magnetventil;
- Fig. 8: auf der Basis der herkömmlichen Ventilkonstruktion nach Fig. 4 den konstruktiven Aufbau einer Ventilpatrone nach Fig. 5 in der Ausführung als stromlos geschlossenes 2/2-Wege-Patronen-Magnetventil;
- Fig. 9: auf der Basis der herkömmlichen Ventilkonstruktion nach Fig. 4 den konstruktiven Aufbau einer Ventilpatrone nach Fig. 5 in der Ausführung als stromlos offenes 2/2-Wege-Patronen-Magnetventil;
- Fig. 10: eine Ventilpatrone nach Fig. 7 mit einer konstruktiven Ausgestaltung für Dichtungen und Druckmittelanschlüsse;
- Fig. 11: eine aus Patronenventilen aufgebaute Vorsteuereinheit entsprechend der Schaltung nach Fig. 1 oder Fig. 2 mit einer 3-fachVentilpatroneneinheit und einer 3-fach-Magnetspuleneinheit;
- Fig. 12: die Kanalführung für die Druckmittelanschlüsse entsprechend der Vorsteuereinheit nach Fig. 11.

Ein elektronisch geregeltes Bremssystem [EBS] für Anhängerfahrzeuge verfügt über mehrere unabhängig voneinander arbeitende Bremsregelkreise für die Radbremsen des Fahrzeugs [mehrkanaliges System]. Ein Bremsregelkreis, der einen Druckregelkanal für eine Radbremse darstellt, besteht aus einer Vorsteuereinheit, die aus Magnetventilen aufgebaut ist, aus einem luftmengenverstärkenden Relaisventil, aus mindestens einem Bremszylinder für die Radbremsen, einem an einer geeigneten Stelle angebrachten Bremsdrucksensor und aus einer elektronischen Steuereinrichtung, welche die Bremsdruckregelung durchführt.

Die Bremsregelkreise für die unterschiedlichen Kanäle des mehrkreisigen Systems sind gleichartig aufgebaut, so daß mit der Beschreibung eines Bremsregelkreises die anderen Bremsregelkreise ebenfalls beschrieben sind. Dem Ausführungsbeispiel wird daher die Konfiguration einer Basisvariante für Anhänger-EBS-Systeme zugrundegelegt, welche aus einem Sattelauflieger mit zwei Achsen besteht, es handelt sich hier um ein 4S/2M-System [vier ABS-Sensoren für vier Räder und zwei Modulatorkanäle für die Radbremsen der linken bzw. der rechten Seite]; die Bremsdruckregelung wird also seitenweise durchgeführt.

Das EBS-Anhängerfahrzeug ist mit einem EBS-Zugfahrzeug über eine elektrische und über eine pneumatische Schnittstelle verbunden. Die elektrische Schnittstelle besteht aus der digitalen Datenschnittstelle nach ISO 1199-2; die pneumatische Schnittstelle besteht aus erstens der Vorratsleitung, die den Anhänger mit Druckluft versorgt und zweitens der Bremsleitung, die in dem Anhänger mit einem Anhängerbremsventil verbunden ist. Das Anhängerbremsventil steuert an seinem pneumatischen Ausgang einen Bremsdruck aus, der von dem auf der pneumatischen Bremsleitung übertragenen Bremsdruck abgeleitet ist und diesem entspricht.

Auf der Seite des EBS-Zugfahrzeuges sind die Vorrats- und die Bremsleitung an ein Anhängersteuerventil angeschlossen. Im Zusammenwirken von Anhängersteuer- und Anhängerbremsventil ist die Abriß-Sicherung realisiert, wie sie von konventionell gebremsten Fahrzeugzügen [Zugfahrzeug-Anhängerfahrzeug] bekannt ist; bei einem derartigen Abriß wird in der bekannten Art und Weise vom Anhängerbremsventil ebenfalls ein Bremsdruck ausgesteuert.

Da, wie erläutert, u. a. die Abriß-Sicherung in gleicher Weise wie bei konventionell gebremsten Fahrzeugen realisiert ist, kann das EBS-Anhängerfahrzeug auch hinter einem Zugfahrzeug mit konventioneller Bremsanlage betrieben werden. Das Anhängerbremsventil im EBS-Anhängerfahrzeug enthält so auch die erforderlichen Funktionen eines herkömmlichen Anhängerbremsventiles in konventionellen Bremsanlagen wie Abrißfunktion und Rückschlagventil.

Im EBS-Anhängerfahrzeug dient der vom Anhängerbremsventil ausgesteuerte Druck zur pneumatisch redundanten Bremsung im Falle eines EBS-Ausfalls; außerdem dient er unter Verwendung eines im Anhängerbremsventil angeordneten Drucksensors zur Ermittlungen des elektrischen Sollwertes für den Fall, daß der EBS-Anhänger an einem konventionellen Zugfahrzeug, d. h. an einem Nicht-EBS-Zugfahrzeug betrieben wird. Dieser ausgesteuerte Druck stellt den Redundanzdruck dar.

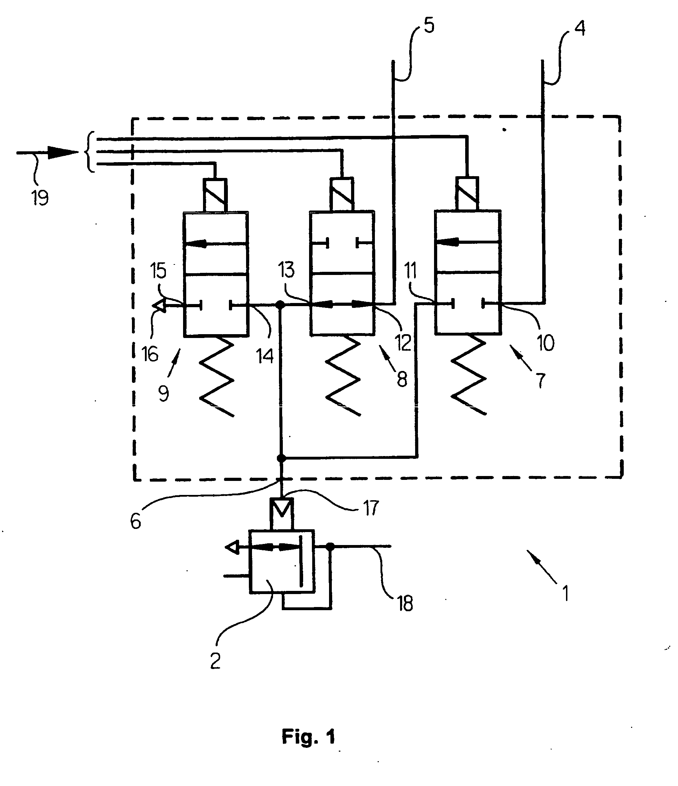

In der pneumatischen Schaltung nach Fig. 1 ist die Vorsteuereinheit (1) und das luftmengenverstärkende Relaisventil (2) dargestellt. Die Vorsteuereinheit (1) verfügt über einen ersten pneumatischen Eingang (4), der mit dem Versorgungsdruck verbunden ist und über einen zweiten pneumatischen Eingang (5), der mit dem pneumatischen Ausgang des nicht dargestellten Anhängerbremsventiles zur Übertragung des Redundanzdruckes verbunden ist. Ein pneumatischer Ausgang (6) der Vorsteuereinheit (1) ist mit dem Eingang (17) des Relaisventiles (2) verbunden. Die unten erläuterten Magnetventile für die Vorsteuereinheit (1) werden durch elektrische Steuerleitungen (19), die von einer nicht dargestellten elektronischen Steuereinheit ausgehen, angesteuert.

Der pneumatische Ausgang (18) des Relaisventiles (2) ist mit den nicht dargestellten Bremszylindern für diesen Bremsregelkreis verbunden.

Entsprechend Fig. 1 sind in der Vorsteuereinheit (1) drei Magnetventile vorgesehen; ein erstes Magnetventil verfügt über einen ersten Anschluß (10) und einen zweiten Anschluß (11), ein zweites Magnetventil (8) verfügt über einen ersten Anschluß (12) und einen zweiten Anschluß (13) und ein drittes Magnetventil (9) verfügt über einen ersten Anschluß (14) und einen zweiten Anschluß (15).

Der erste Anschluß (10) des ersten Magnetventiles (7) ist mit dem ersten pneumatischen Eingang (4) der Vorsteuereinheit (1) verbunden, der erste Anschluß (12) des zweiten Magnetventiles (8) ist mit dem zweiten pneumatischen Eingang der Vorsteuereinheit (1) verbunden, der zweite Anschluß (11) des ersten Magnetventiles (7) ist mit dem pneumatischen Ausgang (6) der Vorsteuereinheit (1) verbunden, der zweite Anschluß (13) des zweiten Magnetventils (8) ist mit dem ersten Anschluß (14) des dritten Magnetventiles (9) und dem pneumatischen Ausgang (6) der Vorsteuereinheit (1) verbunden und der zweite Ausgang (15) des dritten Magnetventiles (9) ist mit einer Drucksenke (16) verbunden.

Das erste Magnetventil (7) und das dritte Magnetventil (9) sind als stromlos geschlossene 2/2-Wege-Magnetventile ausgestaltet, während das zweite Magnetventil (8) als stromlos offenes 2/2-Wege-Magnetventil ausgebildet ist.

Die Magnetventile (7), (8), (9) der Vorsteuereinheit (1) dienen zur Festlegung des Druckes in der Steuerkammer des Relaisventiles (2); sie sind in taktender Betriebsweise zu betreiben.

Das zweite Magnetventil (8) dient zur Übertragung des Redundanzdruckes in die Steuerkammer des Relaisventiles (2), im stromlos offenen Zustand folgt der Steuerkammer-Druck, wenn die anderen Magnetventile (7) und (9) nicht betätigt sind, dem am zweiten pneumatischen Eingang (5) der Vorsteuereinheit (1) angelegten Redundanzdruck; dieses Redundanzdruck-Ventil dient also sowohl als Belüftungs- als auch als Entlüftungsventil für den Steuerkammer-Druck. Im stromlos geschlossenen Zustand trennt das zweite Magnetventil (8) den Redundanzdruck von der Steuerkammer des Relaisventiles (2) ab.

Das erste Magnetventil (7) ist durch seine Verbindung mit dem Vorratsdruck als Belüftungs- und das dritte Magnetventil (9) ist durch seine Verbindung mit der Drucksenke als Entlüftungs-Ventil für die Steuerkammer des Relaisventiles (2) vorgesehen.

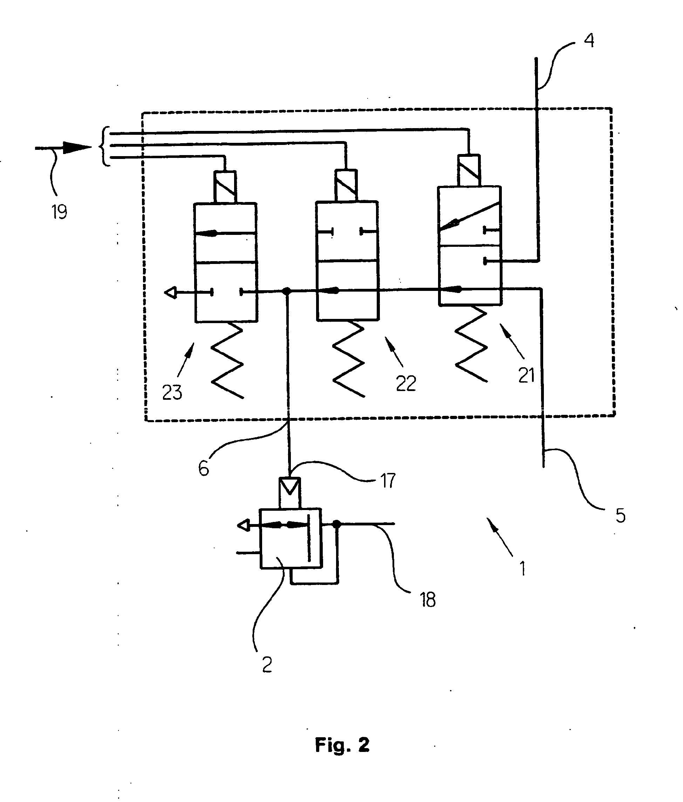

Die Magnetventile (7), (8) und (9) sind im Gegensatz zur Reihenschaltung von Ventilen nach Fig. 2 parallel zueinander geschaltet, wodurch sie auch gleichzeitig betätigt werden können.

So kann z. B. bei einer Vollbremsung, bei der das Belüftungs-Ventil (7) zur Druckerhöhung betätigt wird, das Redundanzdruck-Ventil (8) gleichzeitig in seiner nicht betätigten Stellung verharren: Der während der Vollbremsung ansteigende Redundanzdruck unterstützt die Belüftung der Steuerkammer des Relaisventiles (2), wodurch die Druckaufbauzeit verkürzt wird. Ebenfalls kann während einer Bremsbetätigungs-Rücknahme zusätzlich zur Betätigung des Entlüftungsventiles (9) das Redundanzventil (8) im unbetätigten Zustand verbleiben, wodurch die Zeit für den Druckabbau des Steuerkammer-Druckes im Relaisventil (2) ebenfalls verkürzt wird.

Durch die unten erläuterte Gleichheit der Magnetspulen und Ventilanker der Magnetventile (7), (8) und (9) weisen diese Ventile ein gleichartiges Schaltverhalten auf, wodurch ein gewünschtes Zeitverhalten von Druckauf- und Druckabbau im Steuerraum des Relaisventiles (2) durch die Wahl von geeigneten Taktzeiten für die Magnetventile sehr übersichtlich zu gestalten ist.

Fig. 2 zeigt eine zu Fig. 1 andersartige pneumatische Schaltung für die Vorsteuereinheit eines Bremsregelkreises des Bremsdruckmodulators, welche aus der DE 42 27 084 A1 bekannt ist. Ein 3/2-Wege-Magnetventil (21) dient als Umschaltventil zwischen dem am ersten pneumatischen Eingang (4) anliegenden Versorgungsdruck und dem am zweiten pneumatischen Eingang (5) anliegenden Redundanzdruck, wobei bei unbetätigtem Magneten der Redundanzdruck eingeschaltet ist. In Reihe zu diesem Ventil ist das stromlos offene 2/2-Wege-Magnetventil (22) geschaltet, welches dem pneumatischen Ausgang (6) mit dem von dem Umschaltventil (21) ausgewählten Druck beaufschlagt; d. h. dieses Ventil wirkt als Belüftungsventil. Das stromlos offene 2/2-Wege-Magnetventil (23) entlüftet bei seiner Betätigung den pneumatischen Ausgang (6) und wirkt dadurch als Entlüftungsventil.

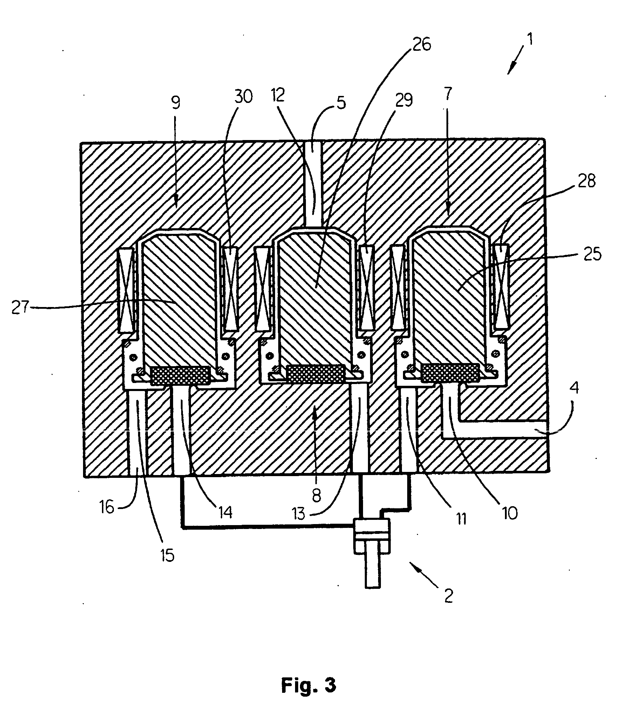

In Fig. 3 ist die Konstruktion der Magnet-Ventile entsprechend der pneumatischen Schaltung nach Fig. 1 in einem Ventilblock mit ihrer Verrohrung dargestellt. Der Magnetanker (25) des Magnetventiles (7) ist baugleich zu dem Magnetanker (26) des Magnetventiles (8) und zu dem Magnetanker (27) des Magnetventiles (9) aufgebaut; die Magnetspule (28) des Magnetventiles (7) ist ebenfalls baugleich zu der Magnetspule (29) des Magnetventiles (8) und zu der Magnetspule (30) des Magnetventiles (9) aufgebaut. Bezüglich der Darstellung der Verrohrung sei angemerkt, daß entsprechend den vorstehenden Erläuterungen die Zusammenschaltung der Anschlüsse (11), (13) und (14) den pneumatischen Ausgang (6) der Vorsteuereinheit (1) darstellt.

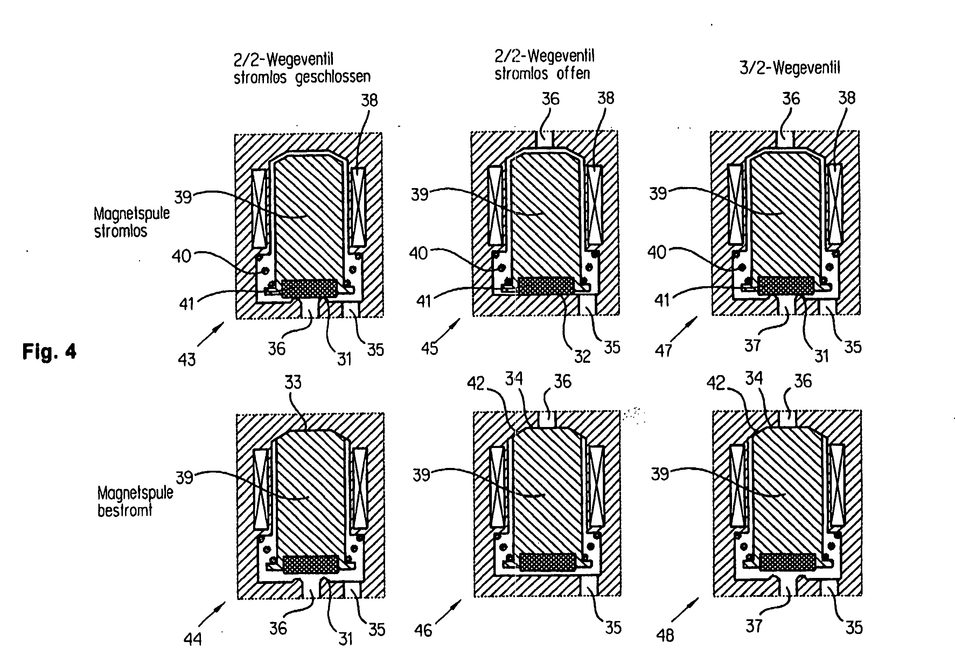

In Fig. 4 ist gezeigt, wie unter Verwendung gleichartiger Magnetanker Magnetventile mit unterschiedlicher Funktion, wie sie für die Realisierung der pneumatischen Schaltungen nach Fig. 1 und Fig. 2 erforderlich sind, realisiert werden können. Die Erläuterungen unter Fig. 4 legen eine herkömmliche Ventilkonstruktion zugrunde, bei der die Magnetspule mit der Magnetanker-Einheit baulich vereinigt ist; diese Erläuterungen gelten als solche auch für die unten erläuterte Ventilpatronen-Konstruktion, bei der die Magnetspule in einer anderen Baueinheit als die Magnetanker-Einheit untergebracht ist. Die Bezugszeichen sind für die einzelnen Ventilvarianten einheitlich gewählt, so daß sie von einer Ventilkonstruktion zu einer anderen Ventilkonstruktion direkt übertragbar sind.

Unter dem Bezugszeichen (43) ist ein stromlos geschlossenes 2/2-Wege-Magnetventil in der Stellung der stromlosen Magnetspule (38) angegeben. Da in dieser Stellung keine Magnetkraft wirkt, wird der Magnetanker (39) durch die Wirkung der Magnetanker-Rückstellfeder (40) bis zu einer ersten Hubbegrenzung (31) verschoben, bei der an dieser Stelle ein Dichtsitz vorgesehen ist. Der Elastomereinsatz (41) kommt zur Anlage mit dem Dichtsitz (31) und der erste Anschluß (35) ist hermetisch gegenüber dem zweiten Anschluß (36) abgedichtet.

Unter dem Bezugszeichen (44) ist das stromlos geschlossene 2/2-Wege-Magnetventil in dem Zustand der bestromten Magnetspule (38) gezeichnet. Der Magnetanker (39) kommt an einer durch die Magnetkraft bedingten zweiten Hubbegrenzung (33) zur Anlage, der Ventilsitz öffnet, und der erste Anschluß (35) ist mit dem zweiten Anschluß (36) verbunden.

Die nächste Ventil-Variante stellt ein stromlos offenes 2/2-Wege-Magnetventil dar, das unter dem Bezugszeichen (45) im stromlosen Schaltzustand gezeichnet ist. Über die Wirkung der Magnetanker-Rückstellfeder (40) kommt der Magnetanker an einer ersten Hubbegrenzung (32) zur Anlage, die jedoch in diesem Fall nicht mit einem Dichtsitz ausgestaltet ist. In dieser Schaltstellung ist der erste Anschluß (35) mit dem zweiten Anschluß (36) verbunden.

Das stromlos offene 2/2-Wege-Magnetventil ist unter dem Bezugszeichen (46) im bestromten Schaltzustand gezeichnet. Der Magnetanker (39) kommt an einer zweiten Hubbegrenzung (34) zur Anlage und bildet an dieser Stelle durch die Ausformung (42) des Magnetankers mit dem zweiten Anschluß (36) einen Metall-Metall-Ventilsitz: Der erste Anschluß (35) ist von dem zweiten Anschluß (36) abgetrennt. Der Metall-Metall-Ventilsitz ist im Gegensatz zum oben erläuterten Ventilsitz unter Verwendung des Elastomer-Einsatzes (41) nicht hermetisch dichtend, d. h. es treten Leckagen auf. Wie unten erläutert, ist die Schaltungstechnik für den Einsatz dieses Ventils derart gewählt, daß diese Leckagen ohne Bedeutung sind.

Unter den Bezugszeichen (47), (48) ist gezeigt, wie unter Verwendung des Magnetankers (39) ein 3/2-Wege-Magnetventil aufgebaut werden kann.

Unter dem Bezugszeichen (47) ist das 3/2-Wege-Magnetventil für den Schaltzustand der stromlosen Magnetspule (38) gezeichnet: Über die Wirkung der Magnetanker-Rückstellfeder kommt der Magnetanker (39) an der ersten Hubbegrenzung (31) mit Dichtsitz zur Anlage. Über diesen Ventilsitz ist der erste Anschluß (35) gegenüber dem dritten Anschluß (37) abgetrennt, jedoch besteht eine Verbindung des ersten Anschlusses (35) zum zweiten Anschluß (36).

Unter dem Bezugszeichen (48) ist das 3/2-Wege-Magnetventil im bestromten Schaltzustand gezeichnet. Durch die Magnetkraft kommt der Anker an der zweiten Hubbegrenzung (34) mit dem zweiten Anschluß (36) zur Anlage und bildet mit der Ausformung (42) einen Metall-Metall-Dichtsitz. Hierdurch ist der erste Anschluß (35) vom zweiten Anschluß (36) abgetrennt, jedoch ist der erste Anschluß (35) mit dem dritten Anschluß (37) verbunden.

Beim Vergleich der pneumatischen Schaltung nach Fig. 1 mit der Ventilkonstruktion nach Fig. 3 ist gezeigt, daß für den Ruhezustand der Vorsteuereinheit, welcher durch den stromlosen Schaltzustand aller drei Magnetventile (7), (8) und (9) gegeben ist, durch die Wirkung der Magnetanker-Rückstellfedern nur hermetisch dichtende Ventilsitze im Einsatz sind: Die Magnetventile (7) und (9) sind geschlossen und das Magnetventil (8) ist geöffnet.

Erst bei einer gewünschten Veränderung des Steuerkammer-Druckes im Relaisventil (2) wird zur Druckerhöhung das Belüftungsventil (7) und zur Druckverringerung das Entlüftungsventil (9) jeweils in taktender Betriebsweise betätigt.

Wenn bei dieser Druckerhöhung bzw. Druckverringerung der Einfluß des Redundanzdruckes ausgeschaltet werden soll [die oben erläuterte Unterstützung der Be- oder Entlüftung der Relaisventil-Steuerkammer durch den ansteigenden bzw. abfallenden Redundanzdruck soll in diesem Fall nicht stattfinden], so wird das Redundanzdruckventil (8) betätigt und der am zweiten pneumatischen Eingang (5) anliegende Redundanzdruck wird über den in diesem Schaltzustand wirkenden Metall-Metall-Ventilsitz von der Relaisventil-Steuerkammer [pneumatischer Ausgang (6)] abgetrennt.

Da, wie vorstehend erwähnt, an diesem Ventilsitz Leckagen auftreten können, ist die Abtrennung nicht hermetisch, d. h. der vorliegende Redundanzdruck wird durch die Ventilsitz-Leckage den Steuerkammer-Druck im Relaisventil (2) in sehr geringem Maße beeinflussen. Dieser Einfluß ist jedoch unerheblich, da, wie erläutert, zur gleichen Zeit eine taktende Belüftung durch das Belüftungsventil (7) oder eine taktende Entlüftung über das Entlüftungsventil (9) stattfindet, wobei die jeweils vollen Querschnitte dieser Ventile wirksam sind.

Der Leckagequerschnitt ist einerseits schon außerordentlich klein gegenüber den Ventilquerschnitten und andererseits wird ein Takten im geschlossenen Regelkreis durchgeführt, und zwar derart, daß solange auf- bzw. abgetaktet wird, bis der am pneumatischen Ausgang (18) des Relaisventiles (2) ausgegebene Bremsdruck einem von der elektronischen Steuereinheit berechneten Bremsdruck-Sollwert entspricht [der Berechnung des Bremsdruck-Sollwertes in der elektronischen Steuereinheit liegen neben der elektrischen Bremswertvorgabe durch die elektrische Schnittstelle, welche die Hauptvorgabe darstellt, weitere Einflußfaktoren durch die Beladung oder die ABS-Bremsregelung zugrunde]. Mit dem Erreichen des Bremsdruck-Sollwertes ist das Takten beendet und die Magnetventile (7) und (9) befinden sich wieder in ihrem stromlosen Schaltzustand; das Redundanzventil (8) bleibt weiter betätigt. Sollte es jetzt durch den Metall-Metall-Ventilsitz zu einer geringen Entlüftung der Steuerkammer des Relaisventiles (2) kommen, die durch eine Absenkung des Druckes am pneumatischen Ausgang (18) erkennbar wird, so wird im Rahmen der Druckregelung diese Absenkung durch ein einmaliges Takten des Belüftungsventiles (7) wieder kompensiert.

Beim Schließen eines Ventilsitzes über die Magnetkraft wird nach dem Beginn der Strombeaufschlagung der Magnetspule durch die räumliche Entfernung vom Magnetanker und Ventilsitz [der Eisenkreis ist nicht geschlossen] zunächst nur ein geringer magnetischer Kraftfluß aufgebaut. Um den Magnetanker überhaupt in Bewegung zu setzen, muß durch einen großen Strom eine hohe Betätigungskraft erzeugt werden, die nur einen Bruchteil der späteren Haltekraft für den Anker ausmacht. Durch die ständige Kraftbeaufschlagung in großer Höhe wird der Magnetanker eines Magnetventiles beschleunigt und baut damit kinetische Energie auf, die beim Auftreffen des Ankers am Ventilsitz wieder vernichtet wird.

Bei den üblichen Ventilen nach dem Stand der Technik wird die Dichtung am Ventilsitz durch einen Elastomer-Einsatz im Magnetanker hergestellt.

Damit die Vernichtung der kinetischen Beschleunigungsenergie des Ankers beim Auftreffen auf den Ventilsitz im Rahmen einer Dauerbelastung nicht zur Zerstörung des Elastomers führt, ist ein solcher Elastomer-Einsatz nicht starr sondern federnd mit dem Körper des Ankers verbunden. In der DE-A1-27 57 803 ist unter der dortigen Fig. 4 ein Magnetanker mit zwei Elastomer-Dichteinsätzen [dort (50'), (52')] für zwei Ventilsitze gezeigt, welche federnd gelagert sind [dort Federn (51), (53)]. Ein federnder Dichtsitz nach dieser Bauweise bedingt, damit die Federung überhaupt wirksam werden kann, einen relativ großen Ventilhub, der z. B. 1,2 mm beträgt. Eine derartige Konstruktion bewirkt auch eine bestimmte minimale Baugröße, damit eine federnde Konstruktion unterzubringen ist, was zu einer relativ großen Ankermasse führt, und dies bedingt wiederum eine entsprechende Verstärkung der Anker-Rückstellfeder. Die stärkere Rückstellfeder führt dann zu einer Erhöhung der erforderlichen Magnetkraft, die bei einer derartiger Ventilsitz-Konstruktion bei ca. 30 N liegt. Die Schaltzeit [Strombeaufschlagung der Magnetspule bis zum Schließen des Ventilsitzes] ist im wesentlichen durch die Zeit für den Stromaufbau in der Magnetspule gegeben und liegt typischerweise in der Größenordnung von 25 ms.

In einem Einsatz für Vorsteuerungen muß man diese Ventile üblicherweise mit einer Nennweite von ca. 2,2 mm ausstatten, um zu vermeiden, daß durch die Druckluft-Pilotleitungen, die die räumliche Entfernung eines Ventiles zu der drucksummierenden Relaisventil-Steuerkammer überbrücken, ein großer Druckabfall entsteht.

Beim Betrieb derartiger Vorsteuerventile in einem geschlossenen Druckregelkreis führt die Nennweite von ca. 2,2 mm dazu, daß der ausgesteuerte Druck nicht sehr feinfühlig abstufbar ist und die Schaltzeit von ca. 25 ms führt im Betrieb mit einem üblichen Abtastregler zu einer Begrenzung des realisierbaren Druckgradienten für den ausgesteuerten Druck.

Bei der Ventilkonstruktion nach der Erfindung kann dadurch, daß die Magnetanker nicht an zwei, sondern nur an einem Ende über einen Elastomer-Einsatz verfügt und daß an dem diesem gegenüberliegenden Ende nur eine Ausformung zur Bildung eines Metall-Metall-Dichtsitzes vorhanden ist, eine kleine Bauweise gewählt werden. Dadurch wird die Masse des Magnetankers auf ca. 6 g reduziert und aufgrund der nur schwach ausgelegten Anker-Rückstellfeder ist eine Magnetkraft von nur ca. 6 N erforderlich.

Die Beschleunigungsfestigkeit der Ausformung am metallisch dichtenden Sitz wird dadurch gewährleistet, daß sie mit einer Beschichtung versehen ist, wie dies in der DE-A1-197 30 276 angegeben ist.

Dadurch, daß bei einem Metall-Metall-Dichtsitz das Dichten nicht durch "Elastomer-Eindrücken" erfolgt und kein Federweg erforderlich wird, kann ein sehr kleiner Ventilhub von ca. 0,5 mm gewählt werden. Mit diesem kleinen Ventilhub und der ohnehin schwach ausgelegten Anker-Rückstellfeder erübrigt sich auch eine federnde Lagerung des Elastomer-Einsatzes, wie dies beim obengenannten Stand der Technik der Fall ist.

Durch diese optimierten Druckluftverbindungen kann die Nennweite eines Magnetventiles auf einen Wert um 1,7 mm reduziert werden, was einen optimalen Wert für ein Pilotventil in Fahrzeug-Anwendungen darstellt: Er gewährleistet einerseits eine gute Stufbarkeit für den ausgesteuerten Bremsdruck und er ist andererseits nicht so klein, daß die üblichen Verschmutzungen von Druckluft in Fahrzeugen schon eine Rolle spielen.

Mit den erläuterten Maßnahmen lassen sich die Schaltzeiten für die Magnetventile auf ca. 6 ms reduzieren. Mit den reduzierten Schaltzeiten können sich schnell ändernde Sollwertvorgaben für den Bremsdruckregler realisiert werden und am Ausgang (18) des Relaisventiles (2) sind hohe Gradienten für den ausgesteuerten Bremsdruck realisierbar.

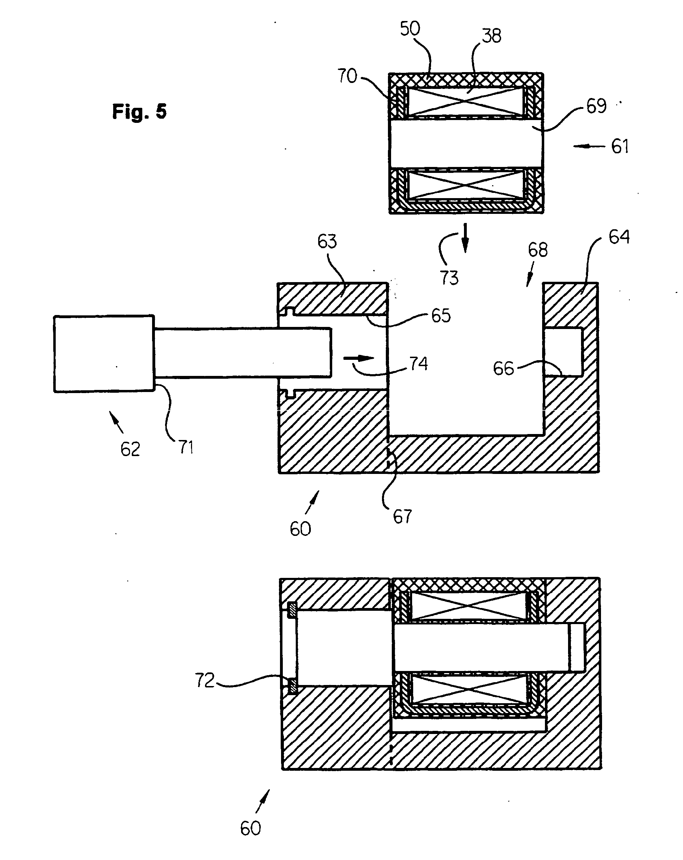

Fig. 5 zeigt die verschiedenen Baueinheiten, die im Zusammenhang mit der erfindungsgemäßen Ventilpatrone vorgesehen sind. Im oberen Teil von Fig. 5 sind diese Baueinheiten als Einzelteile vor ihrem Zusammenbau und im unteren Teil von Fig. 5 sind die Baueinheiten in ihrem zusammengebauten Zustand dargestellt.

Als erste separate Baueinheit ist ein Gehäuse (60), als zweite separate Baueinheit ist eine Magnetspuleneinheit (61), und als dritte separate Baueinheit ist die Ventilpatrone (62) gezeigt.

Das Gehäuse (60) stellt ein einteiliges Gehäuse dar, bei dem durch eine quaderförmige Ausnehmung (68) ein erster Gabelflansch (63) und ein zweiter Gabelflansch (64) gebildet wird. Aus praktischen Herstellungsgründen kann das Gehäuse (60) aus mehreren Teilen bestehen, wie dies durch die Trennfuge (67) am ersten Gabelflansch (63) angedeutet ist; nach der Montage von gegebenenfalls mehreren Einzelteilen besteht das Gehäuse (60) jedenfalls aus einem Teil. Im ersten Gabelflansch (63) ist eine erste Bohrung (65) vorgesehen und koaxial zu der ersten Bohrung (65) ist im zweiten Gabelflansch (64) eine zweite Sackbohrung (66) vorgesehen.

Die Magnetspuleneinheit (61) und die quaderförmige Ausnehmung (68) sind derart ausgebildet, daß die Magnetspuleneinheit (61) in einer ersten Montagerichtung (73) in der quaderförmigen Ausnehmung (68) positionierbar ist. Die Magnetspuleneinheit (61) verfügt über eine durch die Magnetspule gehende Öffnung (69) in der Form eines geraden Kreiszylinders. Im Inneren der Magnetspuleneinheit (61) befindet sich die eigentliche Magnetspule (38) und das aus ferromagnetischem Material bestehende Jochblech (70). Zur Montage der Magnetspuleneinheit (61) wird die Magnetspule (38) in das Jochblech (70) eingelegt und diese Teile werden dann unter Verwendung eines geeigneten Montagekerns, der die durchgehende Öffnung (69) freihält, mit einem Kunststoff (50) umspritzt.

Die Ventilpatrone (62) ist entweder in Form eines geraden Zylinders mit kreisrundem Querschnitt oder in Form eines geraden Stufenzylinders mit kreisrundem Querschnitt aufgebaut. Im Ausführungsbeispiel nach Fig. 5 ist die Ventilpatrone (62) als Stufenzylinder mit einer Zylinderstufe (71) dargestellt.

Da der größere Durchmesser des Stufenzylinders [abgesehen von den erforderlichen Toleranzen] derart dimensioniert ist, daß er gleich ist zu dem Durchmesser der ersten Bohrung (65) und der kleinere Durchmesser des Stufenzylinders derart festgelegt ist, daß er gleich ist zu dem Durchmesser der zweiten Sackbohrung (66), läßt sich die Ventilpatrone (62) in das Gehäuse (60) mit der im Gehäuse positionierten Magnetspuleneinheit (61) in einer zweiten Montagerichtung (74) einschieben, die im Ausführungsbeispiel nach Fig. 5 vom Gabelflansch (63) zum Gabelflansch (64) [von links nach rechts] verläuft. Nach dem Einschieben der Ventilpatrone (62) ist diese zunächst durch die unten erläuterten ersten (86) und dritten (88) Patronen-Funktionsbereiche in ihrer axialen Lageausrichtung geführt, und sie wird dann durch Befestigungsmittel (72) am ersten Gabelflansch (63) befestigt, welche einseitig, d. h. in Montagerichtung wirkend eine Kraft auf die Ventilpatrone (62) ausüben. Diese Kraft wirkt über die Stirnfläche der Zylinderstufe (71) auf die nachfolgend angeordnete Magnetspuleneinheit (61) ein und wird schließlich von dem zweiten Gabelflansch (64) aufgenommen. Die Magnetspuleneinheit (61) ist somit über die Wirkung dieser Kraft fixiert, sie stellt die Fixierkraft dar. Bezüglich der Gabelanordnung bewirkt die Fixierkraft eine elastische Aufspreizung des zweiten Gabelflansches (64) gegenüber dem ersten Gabelflansch (63).

Als Befestigungsmittel (72) können sowohl formschlüssig wirkende Mittel wie Verstemmung, ein Sprengring oder Gewindemittel als auch kraftschlüssig wirkende Mittel wie z. B. Klebung oder Preß-Verbindung verwendet werden.

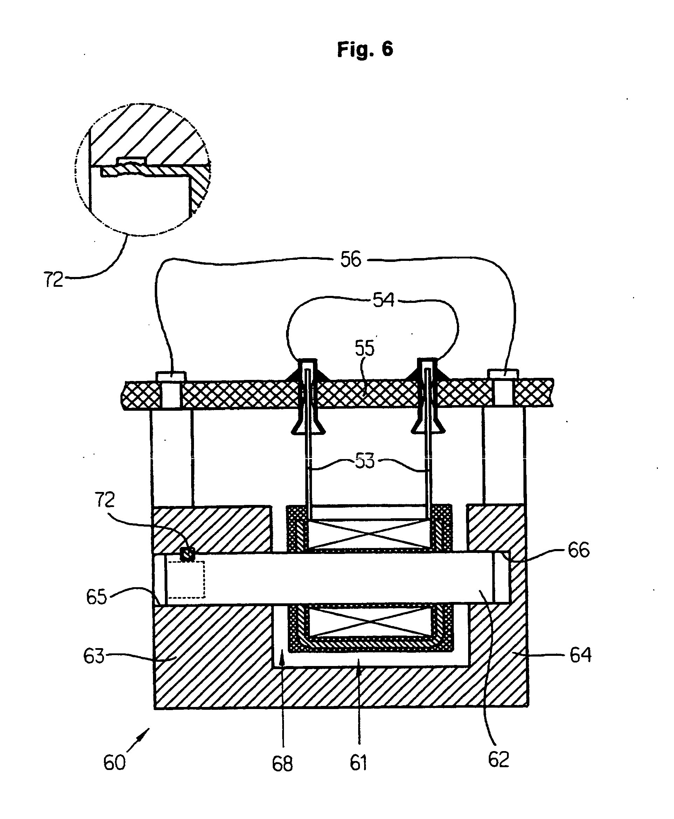

Neben dieser Fixierung der axialen Lage der Magnetspuleneinheit (61) durch die Ventilpatrone (62) selbst gibt es eine alternative Fixierung für die Magnetspuleneinheit (61) entsprechen dem Ausführungsbeispiel nach Fig. 6.

In Fig. 6 hat die Ventilpatrone (63) die Form eines geraden Zylinders mit kreisrundem Querschnitt. Die Durchmesser der ersten Bohrung (65) und der zweiten Sackbohrung (66) sind hier gleich groß wie der Durchmesser des geraden Zylinders.

Wie vorstehend erläutert, läßt sich auch hier die Magnetspuleneinheit (61) in der Gehäuse-Ausnehmung (68) des Gehäuses positionieren und es läßt sich dann die Ventilpatrone (62) in der Montagerichtung vom Gabelflansch (63) zum Gabelflansch (64) einschieben und über Befestigungsmittel (72) am ersten Gabelflansch (63) beidseitig wirkend befestigen, so daß die axiale Lage der Ventilpatrone (62) innerhalb der Bohrungen (65) und (66) fixiert ist; im vergrößerten Ausschnitt [Detaildarstellung] sind die Befestigungsmittel (72) beispielhaft als Bördelung ausgeführt.

Mit der Befestigung der Ventilpatrone (62) ist die Magnetspuleneinheit (61) nicht fixiert, sie ist jedoch in Richtung der Patronenachse verschieblich.

Die Fixierung der Lage der Magnetspuleneinheit (61) in Bezug auf die Patronenachse erfolgt in Bezug auf ein weiteres Bauteil. In Fig. 6 stellt dieses weitere Bauteil eine elektronische Platine (55) dar. Diese Platine ist über Befestigungsmittel (56) mit dem Gehäuse (60) verbunden, wodurch die Lage der als weiteres Fixierbauteil dienenden Platine (55) relativ zum Gehäuse festgelegt ist.

Die Lagefixierung der Magnetspuleneinheit (61) erfolgt in Bezug auf die elektronische Platine (55) durch Kontaktstifte (53), die in entsprechende Kontaktierungsbuchsen (54) eingesteckt sind, welche wiederum über Lötverbindungen mit der Platine formschlüssig verbunden sind.

Die Montagereihenfolge kann natürlich auch so abgewandelt werden, daß die weiteren Fixierungsmittel in Bezug auf ein weiteres Bauteil bereits vor dem Einschieben der Patrone wirksam sind; in diesem Falle wird die Magnetspuleneinheit (61) über die Einführung ihrer Kontaktstifte (53) in die Kontaktierungsbohrungen der Platine (55) und Verlötung mit derselben als erster Arbeitsgang ausgeführt, dann wird die Platine über die Befestigungsmittel (56) mit dem Gehäuse (60) verbunden und schließlich wird die Ventilpatrone (62) in ihrer Montagerichtung in die Gabelflansche (63) und (64) eingeschoben und über die Befestigungsmittel (72) am ersten Gabelflansch (63) befestigt.

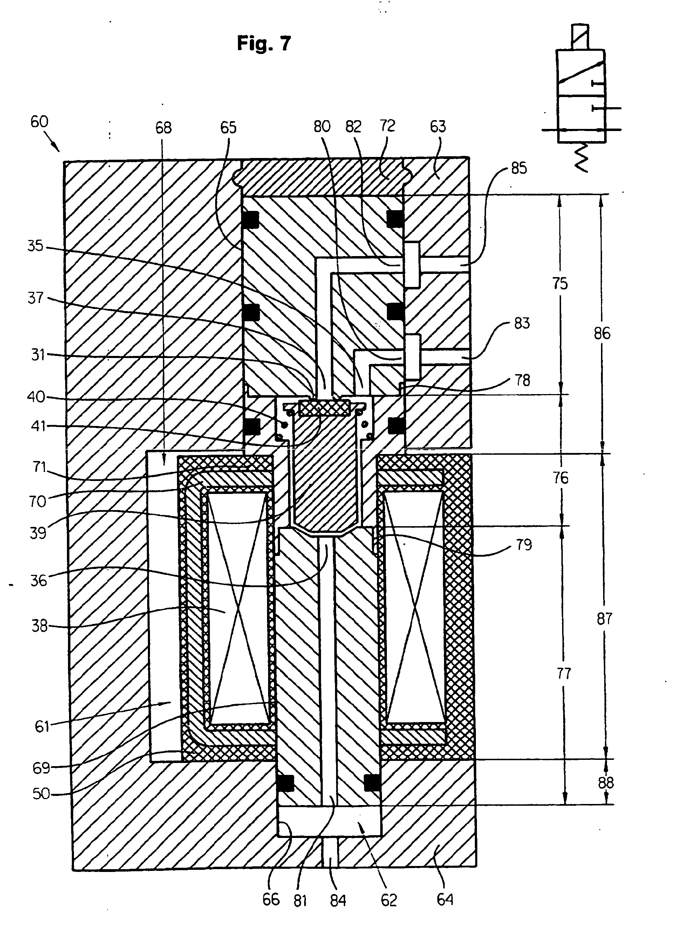

Fig. 7 zeigt eine Ventilpatrone mit den ihr zugeordneten Baueinheiten nach Fig. 5 in der Ausführung als 3/2-Wege-Patronen-Magnetventil. Die Darstellung als Seitenansicht im Schnitt zeigt den konstruktiven Aufbau der Ventilpatrone.

Die Ventilpatrone besteht aus drei einzelnen zylindrischen Körpern, die in der Reihenfolge der vorstehend erläuterten Montagerichtung als erster Zylinderkörper (75), als zweiter Zylinderkörper (76) und als dritter Zylinderkörper (77) bezeichnet sind. Die Zylinderkörper sind entweder in Form eines Zylinders mit kreisrundem Querschnitt ausgeführt, wie dies im Ausführungsbeispiel nach Fig. 7 beim ersten (75) und dritten (77) Zylinderkörper der Fall ist, oder sie sind, wie am zweiten Zylinderkörper (76) dargestellt, als Stufenzylinder mit dem kreisrunden Querschnitt ausgeführt, wobei eine oder mehrere Stufen vorgesehen sein können.

Die Zylinderkörper (75), (76) und (77) sind derart aneinandergereiht, daß der Zylinderdurchmesser in der Montagerichtung abnimmt oder höchstens gleich groß bleibt. An der Trennstelle des ersten Zylinderkörpers (75) zum zweiten Zylinderkörper (76) sind beide Zylinderkörper durch eine Verbindung (68) nicht selbsttätig lösbar verbunden. In gleicher Weise ist der zweite Zylinderkörper (76) an seiner Trennstelle zum dritten Zylinderkörper (77) mit diesem über eine Verbindung (79) verbunden. Als Verbindungsarten für die Verbindungen (78) und (79) kommen unlösbare Verbindungsarten wie Bördeln, Pressen, Löten oder Kleben in Frage, oder die Verbindungen sind lösbar z. B. in Form eines Gewindes ausgeführt.

Der erste (75) und der zweite (76) Zylinderkörper sind aus magnetisch nicht leitendem Material aufgebaut, während der dritte Zylinderkörper (77) aus ferromagnetischem Material besteht.

Der zweite Zylinderkörper (76) ist als Hohlkörper ausgebildet und enthält den Magnetanker (39) mit der Magnetanker-Rückstellfeder (40) entsprechend den Erläuterungen zu den Bezugszeichen (47), (48) bei den Erläuterungen zu Fig. 4.

An der Begrenzung zum zweiten Zylinderkörper (76) ist am ersten Zylinderkörper (75) der in Fig. 4 erläuterte Dichtsitz (31) angeformt, welcher gleichzeitig die Hubbegrenzung für den Magnetanker (39) bei stromloser Magnetspule (38) darstellt.

Am dritten Ventilkörper (77) ist an seiner zum zweiten Ventilkörper (76) weisenden Begrenzung der zweite Anschluß (36) vorgesehen, der als Hubbegrenzung des Magnetankers (38) bei Magnetkraft-Einwirkung dient, und - dort im Zusammenwirken mit der Ausformung (42) des Magnetankers (39) den erläuterten Metall-Metall-Ventilsitz bildet.

Die Magentventil-Anordnung im zweiten Zylinderkörper (76) verfügt über die oben erläuterten ersten (35), zweiten (36) und dritten (37) Anschlüsse, welche durch Kanäle im ersten (75) und dritten (77) Zylinderkörper in der genannten Reihenfolge der Anschlüsse mit einem ersten Patronen-Druckmittelanschluß (80), einem zweiten Patronen-Druckmittelanschluß (81) und einem dritten Patronen-Druckmittelanschluß (82) verbunden sind. Die Art und die Anzahl der Patronen-Druckmittelanschlüsse ist also durch die Art des Magentventiles bestimmt, wobei, wie erläutert, in Fig. 7 ein 3/2-Wege-Magnetventil dargestellt ist.

Die im ersten Zylinderkörper (75) vorgesehenen ersten (80) und dritten (82) Patronen-Druckmittelanschlüsse sind als radiale Druckmittelanschlüsse ausgeführt, während der im dritten Zylinderkörper (77) vorgesehene zweite Patronen-Druckmittelanschluß (81) als axialer Patronen-Druckmittelanschluß vorgesehen ist. Die Ausführung der Patronen-Druckmittelanschlüsse (80) und (82) als radiale Anschlüsse ergibt sich durch die Art der Befestigungsmittel (72), die die Stirnseite des ersten Zylinderkörpers (75) abdecken; der axiale dritte Patronen-Druckmittelanschluß könnte auch als radialer Druckmittelanschluß ausgeführt sein, ist aber als axialer Druckmittelanschluß in Form einer einfachen Bohrung im ferromagnetischen Material sehr einfach zu realisieren.

Korrespondierend zu den Patronen-Druckmittelanschlüssen sind im Gehäuse (60), und dort im ersten (63) und zweiten (64) Gabelflansch, Gehäuse-Druckmittelanschlüsse vorgesehen, welche zur pneumatischen Verschaltung der Patronenventile untereinander vorgesehen sind. Im ersten Gehäuseflansch (63) führt ein erster Gehäuse-Druckmittelanschluß (83) zum ersten Patronen-Druckmittelanschluß (80) und ein dritter Gehäuse-Druckmittelanschluß (85) führt zum dritten Patronen-Druckmittelanschluß (82). Am zweiten Gabelflansch (64) ist ein zweiter Gehäuse-Druckmittelanschluß (84) vorgesehen, der zu dem zweiten Patronen-Druckmittelanschluß (84) führt.

Da wie erläutert der erste (75) und der zweite (76) Zylinderkörper aus nicht ferromagnetischem Material gefertigt sind, können sie aus dem gleichen Material z. B. aus Messing hergestellt sein. Bei gleichem Material lassen sich beide Zylinderkörper dann auch einteilig z. B. als Drehteil fertigen. Im Sinne der Erfindung sind auch bei einer einteiligen Realisierung die beiden Zylinderkörper (75) und (76) mit ihren erläuterten Eigenschaften miteinander verbunden, da sie anstatt eines separaten Fertigungsschrittes zu ihrer Verbindung schon durch die einteilige Herstellung verbunden sind.

Bei bestromter Magnetspule (38) baut sich am Kreis derjenigen Teile von Ventilpatrone (62) und Magnetspuleneinheit (61), welche aus ferromagnetischem Material bestehen, ein starker magnetischer Kraftfluß auf, der die Bewegung des Magnetankers (39) veranlaßt. Dieser Kreis stellt den magnetischen Eisenkreis der Anordnung dar, er wird in Fig. 7 aus dem Jochblech (70), dem Magnetanker (39) und dem dritten Zylinderkörper (77) gebildet.

Der Wirkbereich des magnetischen Eisenkreises besteht aus dem Bereich mit dem Bezugszeichen (87). Durch diesen Wirkbereich wird die Patrone in drei Funktionsbereiche, einen ersten Patronen-Funktionsbereich (86), einen zweiten Patronen-Funktionsbereich (87) und einen dritten Patronen-Funktionsbereich (88) eingeteilt.

Der erste Funktionsbereich (86) erstreckt sich vom Beginn des ersten Zylinderkörpers (75) bis in denjenigen Bereich des zweiten Zylinderkörpers (76), welcher sich noch außerhalb des Wirkbereiches des magnetischen Eisenkreises befindet. Der zweite Patronen-Funktionsbereich (87) stellt, wie erläutert, den Wirkbereich des magnetischen Eisenkreises dar, er erstreckt sich von seinem Beginn im zweiten Zylinderkörper (76) bis in denjenigen Teil des Zylinderkörpers (77), an welchem der Wirkbereich endet. Der dritte Patronen-Funktionsbereich (88) erstreckt sich im dritten Zylinderkörper (77) vom Ende des Wirkbereiches bis zum Ende des Zylinderkörpers.

Die ersten (80) und zweiten (81) Patronen-Druckmittelanschlüsse sind im ersten Patronen-Funktionsbereich (86) und der dritte Patronen-Druckmittelanschluß (82) ist im dritten Patronen-Funktionsbereich vorgesehen; der erste (86) und der dritte (88) Patronen-Funktionsbereich dient also zur Anordnung der Druckmittelanschlüsse. Außer dieser Funktion dient der erste (86) und dritte (88) Patronen-Funktionsbereich auch zur axialen Lageführung der Ventilpatrone (62).

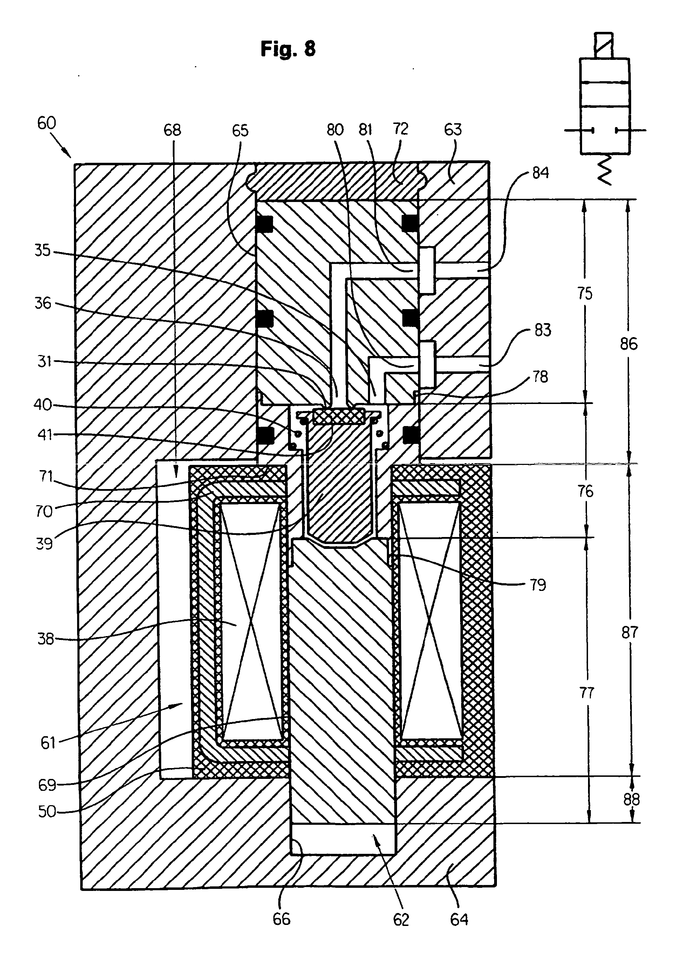

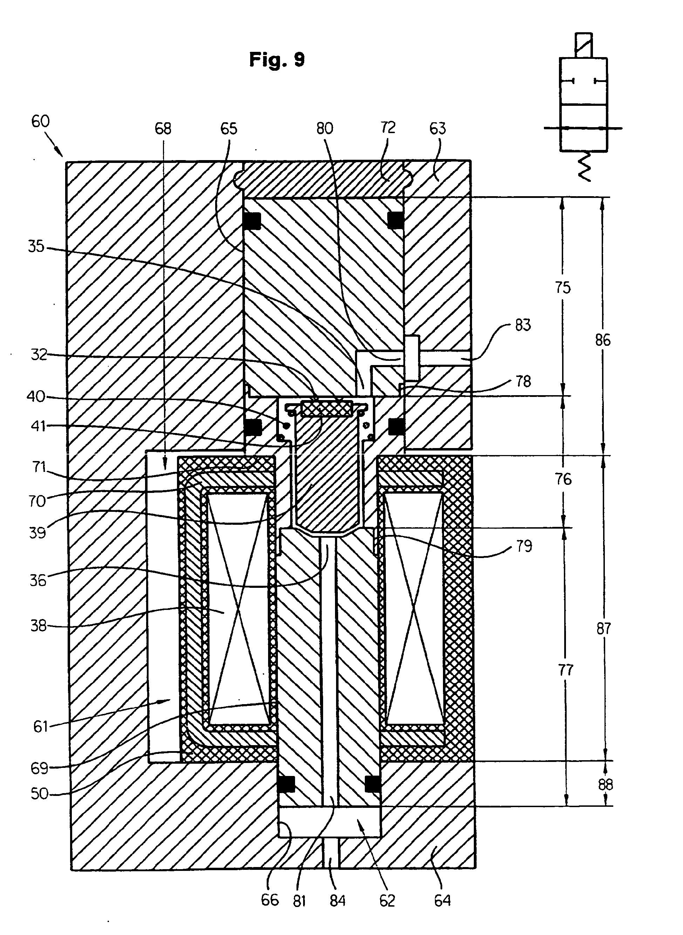

Die Ventilpatrone nach Fig. 8 und Fig. 9 sind grundsätzlich gleichartig zu der Ventilpatrone nach Fig. 7 aufgebaut; die Erläuterungen unter Fig. 7 gelten also auch für Fig. 8 und Fig. 9. Da die Ventilpatronen nach Fig. 8 und Fig. 9 etwas einfacher aufgebaut sind, als die Ventilpatrone nach Fig. 7, beschränken sich die Erläuterungen zu Fig. 8 und Fig. 9 auf diese vereinfachenden Unterschiede.

Fig. 8 zeigt eine Ventilpatrone mit den ihr zugehörenden Baueinheiten in der Ausführung als stromlos geschlossenes 2/2-Wege-Patronen-Magnetventil.

Der als Hohlkörper ausgeführte zweite Zylinderkörper (76) enthält den Magnetanker (39) mit der Magnetanker-Rückstellfeder (40) entsprechend den Erläuterungen zu den Bezugszeichen (43), (44) bei den Erläuterungen zu Fig. 4. Wie bei Fig. 7 ist am ersten Zylinderkörper (75) an seiner Begrenzung zum zweiten Zylinderkörper (76) der Dichtsitz (31) angeformt, welcher auch als Hubbegrenzung für den Magnetanker (39) bei nicht bestromter Magnetspule (38) dient.

Entsprechend zur oben erläuterten Ventilkonstruktion [Fig. 4] ist korrespondierend zum ersten Anschluß (35) ein erster Patronen-Druckmittelanschluß (80) und ein erster Gehäuse-Druckmittelanschluß (83) vorgesehen und korrespondierend mit dem zweiten Anschluß (36) ist ein zweiter Patronen-Druckmittelanschluß (81) und ein zweiter Gehäuse-Druckmittelanschluß (84) vorgesehen. Beide Patronen-Druckmittelanschlüsse befinden sich im ersten Patronen-Funktionsbereich (86).

Fig. 9 zeigt die Ventilpatrone mit den ihr zugehörenden Baueinheiten in der Ausführung als stromlos offenes 2/2-Wege-Patronen-Magnetventil. Im Hohlkörper des zweiten Zylinderkörpers (76) befindet sich der Magnetanker (39) mit der Magnetanker-Rückstellfeder (40) entsprechend den Erläuterungen zu den Bezugszeichen (45), (46) bei den Erläuterungen zu Fig. 4. Im dritten Zylinderkörper (77) befindet sich an der Begrenzung zum zweiten Zylinderkörper (76) der zweite Anschluß (36), der als Hubbegrenzung für den mit Magnetkraft beaufschlagten Magnetanker (39) dient und dort zusammen mit der Ausformung (42) einen Metall-Metall-Ventilsitz bildet.

Korrespondierend zu dem ersten Anschluß (35) ist der erste Patronen-Druckmittelanschluß (80), welcher sich im ersten Patronen-Funktionsbereich (86) befindet, und der erste Gehäuse-Druckmittelanschluß (84) vorgesehen. Korrespondierend zu dem zweiten Anschluß (36) ist der zweite Patronen-Druckmittelanschluß (81), welcher sich im dritten Patronen-Funktionsbereich (88) befindet, und der zweite Gehäuse-Druckmittelanschluß (84) vorgesehen.

Ein Vergleich von Fig. 7 mit Fig. 8 und Fig. 9 zeigt, daß im ersten Patronen-Funktionsbereich (86) immer mindestens ein Patronen-Druckmittelanschluß vorgesehen ist, während im dritten Patronen-Funktionsbereich in Abhängigkeit von der Art des Magnetventiles ein Druckmittelanschluß vorgesehen ist oder nicht.

In Bezug auf die alternative Fixierung der Magnetspuleneinheit (61) nach Fig. 6 sei hinzugefügt, daß eine für diese Fixierungsart geeignete Ventilpatrone mit 3 untereinander verbundenen Zylinderkörpern grundsätzlich gleichartig aufgebaut ist wie die Ventilpatronen entsprechend Fig. 7 bis Fig. 9. Bei einer derartigen Ausführüngsform sind lediglich alle Zylinderkörper als Zylinder mit kreisrundem Querschnitt ausgeführt; es gibt bei solchen Ventilpatronen keine Zylinderstufen.

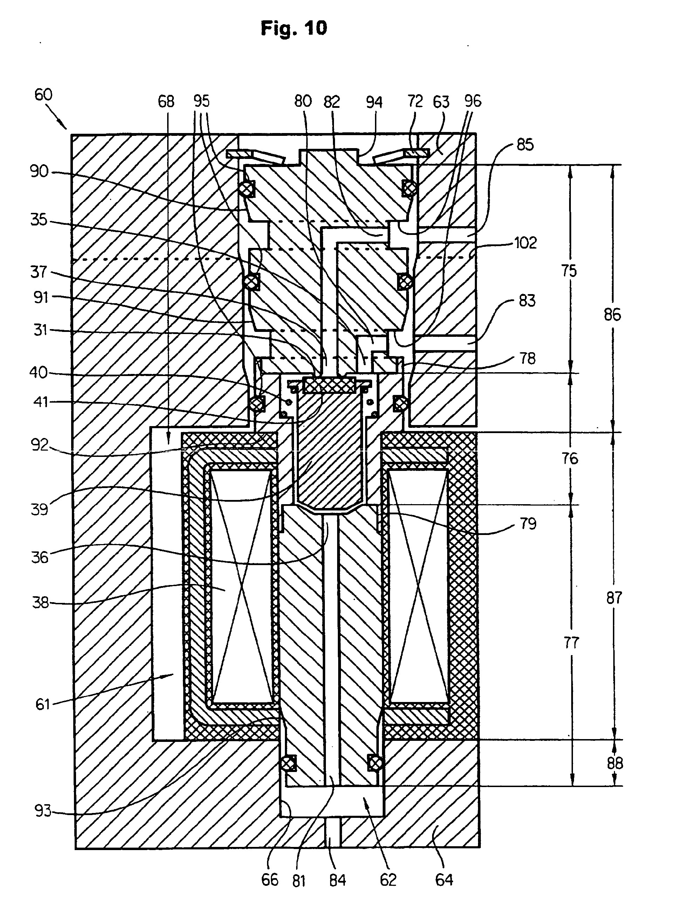

Wie erläutert, dienen Zylinderstufen in der Ventilpatrone zu dem Zweck, den Durchmesser in der Montagerichtung zu verringern. Es wird oben gezeigt, daß diese Verringerung in der Form einer rechtwinkligen Stufe erfolgen kann. Wenn man als Dichtmittel, wie in Fig. 10 dargestellt, O-Ringe verwendet, die in Nut-Einstiche (95) in der Zylinderpatrone (62) eingesetzt werden, so ist es, wie dies die im Gehäuse (60) eingesetzte und fixierte Ventilpatrone (62) zeigt, sinnvoll, mehrere Ventilstufen vorzusehen, die mit einer Ventilstufe verbundene Durchmesser-Reduzierung in Montagerichtung jedoch nicht in jedem Fall als rechtwinklige Stufe auszuführen, sondern verschiedene Stufen auch in Form einer schrägen Durchmesserverringerung zu gestalten.

In Fig. 10 gibt es eine erste als Schräge ausgeführte Ventilstufe (90), eine zweite als Schräge ausgeführte Ventilstufe (91), eine dritte rechtwinklig ausgeführte Ventilstufe (92) und eine vierte als Schräge ausgeführte Ventilstufe (93). Eine derartige Ausführung ist

vorteilhaft, da beim Einschieben der Ventilpatrone, welches mit den in den Nut-Einstichen vormontierten O-Ringen erfolgt, keine Verletzung dieser O-Ringe durch Überfahren der Gehäuse-Druckmittelanschlüsse (85) und (83) zustande kommt.

In Fig. 10 sind die Befestigungsmittel (72) als Sprengring ausgeführt, wodurch die Ventilpatrone an dieser Stelle über eine Andrehung (94) verfügt. An den Patronen-Druckmittelanschlüssen (80) und (82) sind Eindrehungen vorgenommen, die zur Optimierung der Luftführung im Sinne der Vermeidung von Drosselquerschnitten dienen.

Es wird festgestellt, daß die Andrehung (94), die Eindrehungen (96) und die Nut-Einstiche (95) keine Zylinderstufen im Sinne der Erfindung darstellen, da die Durchmesserverringerungen, die durch die Andrehung die Nut-Einstiche und die Eindrehungen bewirkt werden, nicht den Zylinderdurchmesser in Montagerichtung dauerhaft reduzieren. Z. B. reduziert eine Eindrehung den Durchmesser nur für die Breite dieser Eindrehung und der Durchmesser nimmt in Montagerichtung direkt nach der Eindrehung wieder denjenigen Durchmesser an, der an der Stelle gerade vor der Eindrehung bestanden hat.

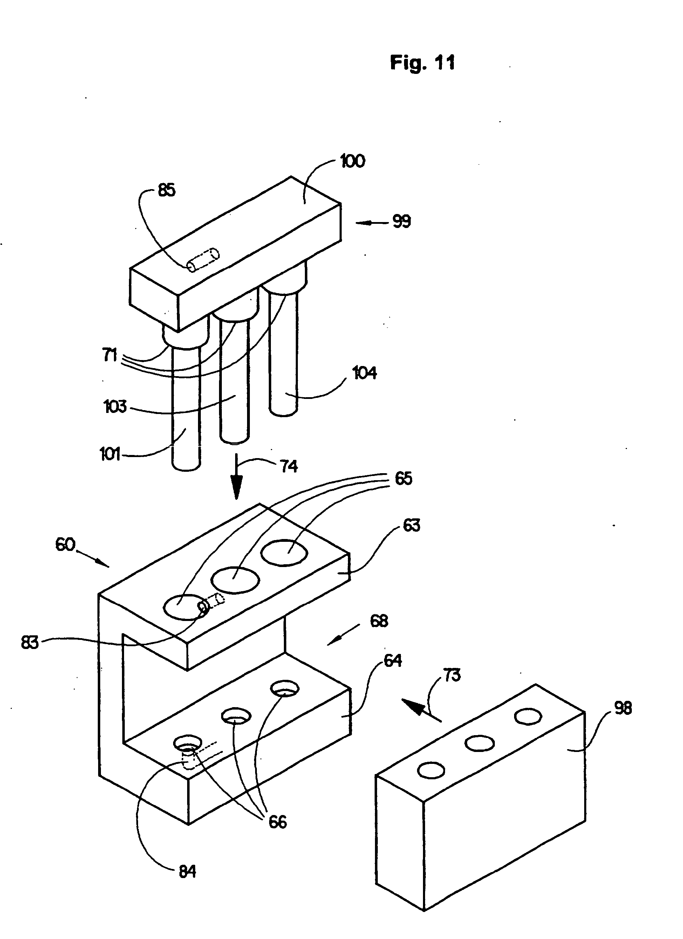

Es ist oben erläutert, wie durch Beschichtung ein beschleunigungsfester Magnetanker mit kleiner Masse und kleinen räumlichen Abmessungen herstellbar ist, der für alle Magnetventile einer Vorsteuereinheit verwendet werden kann. Mit einem derart kleinen Magnetanker ergibt sich auch eine kleine Magnetspule und durch diese kleinen räumlichen Abmessungen ist es dann möglich, die für eine Ventilpatrone (62) vorgesehenen separat ausgebildeten Magnetspuleneinheiten (61) für die insgesamt 3 Magnetventile einer Vorsteuereinheit entsprechend der Schaltung nach Fig. 1 oder der Schaltung nach Fig. 2, wie dies in Fig. 11 dargestellt ist, zu einer kompakten 3-fach-Magnetspuleneinheit (98) auszubilden.

Durch den erläuterten gleichartigen inneren Aufbau der Patronen-Magnetventile für die unterschiedlichen Wege-Anordnungen können die jeweils 3 Patronen-Magnetventile für die Schaltung nach Fig. 1 oder Fig. 2 zu einer 3-fach-Ventilpatroneneinheit montiert werden.

Es sei angemerkt, daß eine 3-fach-Ventilpatroneneinheit auf einer pneumatischen Schaltung beruht, die in diesem Fall aus 3 Magnetventilen besteht. Wesentlich ist, daß bei einer pneumatischen Schaltung mit mehr als einem Magnetventil nach dem unter Fig. 11 erläuterten Prinzip eine Mehrfach-Ventilpatroneneinheit ausbildbar ist. In sinngemäß gleicher Weise ist es auch möglich, eine zu der Mehrfach-Ventilpatroneneinheit passende Mehrfach-Magnetspuleneinheit auszubilden.

Für die 3-fach-Ventilpatroneneinheit (99) in Fig. 11 ist die Schaltung nach Fig. 2 zugrundegelegt, wobei das 3/2-Wege-Magnetventil (21) als 3/2-Wege-Magnetventil-Patrone (101) nach Fig. 7, das stromlos offene 2/2-Wege-Magnetventil (22) als 2/2-Wege-Magnetventil-Patrone (103) nach Fig. 9 und das stromlos geschlossene 2/2-Wege-Magnetventil (23) als 2/2-Wege-Magnetventil-Patrone (104) nach Fig. 8 ausgestaltet ist. Wie erläutert basieren die Ventilpatronen nach Fig. 7, Fig. 8 und Fig. 9 auf den grundsätzlichen Baueinheiten nach Fig. 5; daher sind in der perspektivischen Darstellung der 3-fach-Ventilpatroneneinheit (99) in Fig. 11 an den bezüglich ihrer mechanischen Abmengen gleichartigen Ventilpatronen (101, 103, 104) die jeweiligen Zylinderstufen (71) sichtbar, welche in Richtung einer unten erläuterten zweiten Magnetrichtung (74) eine Kraft auf die 3-fach-Magnetspuleneinheit (98) ausüben und, wie unten erläutert, durch diese Kraft die Einheit (98) in ihrer Lage fixieren.

Bei der Ausbildung nach Fig. 11 ist das Gehäuse (60) derart modifiziert, daß im ersten Gabelflansch (63) jeweils drei erste Bohrungen (65) und im zweiten Gabelflansch (64) jeweils drei zweite Sackbohrungen (66) vorgesehen sind und daß die quaderförmige Ausnehmung (68) zur Aufnahme der 3-fach-Magnetspuleneinheit (98) erweitert ist.

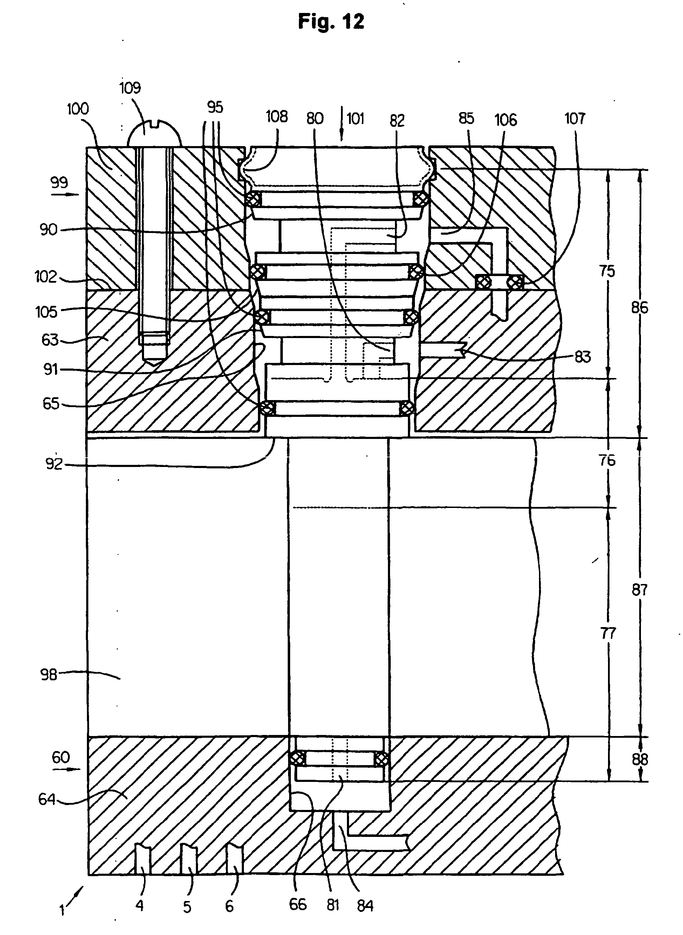

Zur Montage wird die 3-fach-Magnetspuleneinheit (98) in der ersten Montagerichtung (73) in der quaderförmigen Ausnehmung (68) des Gehäuses (60) lose positioniert und dann wird in der zweiten Montagerichtung (74) die 3-fach-Ventilpatroneneinheit (99) in das Gehäuse (60) über die Bohrungen (65) eingeschoben. Das Kopfteil (100) der 3-fach-Ventilpatroneneinheit (99) wird dann mit dem Gabelflansch (63) kraft- oder formschlüssig verbunden und damit ist die 3-fach-Magnetspuleneinheit (98) in der quaderförmigen Ausnehmung (68) des Gehäuses (60) fixiert; hierfür sind in der unten erläuterten Fig. 12 Fixiermittel (109) vorgesehen.

Am Beispiel der 3/2-Wege-Magnetventil-Patrone (101), derjenigen Ventilpatrone, die im Vergleich zu den Ventilpatronen (103, 104) über die meisten Druckmittelanschlüsse verfügt, ist in der 3-fach-Magnetventilpatroneneinheit (99) und in den Gehäuseflanschen (63, 64) die grundsätzliche Lage der im Zusammenhang mit Fig. 7 erläuterten ersten, zweiten und dritten Gehäuse-Druckmittelanschlüsse (83, 84, 85) eingezeichnet. Diese Gehäuse-Druckmittelanschlüsse weisen in die Richtung der anderen Ventilpatronen (103, 104), damit in der 3-fach-Ventilpatroneneinheit (99) und im Gehäuse (60) pneumatische Kanäle gebildet werden können, die der Verrohrung der Magnetventile (21), (22) und (23) nach der pneumatischen Schaltung unter Fig. 2 entspricht. Die Art der Verrohrung ist in Fig. 3 für eine pneumatische Schaltung nach Fig. 1 grundsätzlich erläutert, in sinngemäß gleicher Weise kann die Verrohrung auch für eine Schaltung nach Fig. 2 durchgeführt werden.

Zur möglichst praxisnahen Darstellung der Kanalführung ist in Fig. 12 die Ventilpatrone (101) als 3/2-Wege-Ventilpatrone nach Fig. 10 ausgestaltet.

In Fig. 10 ist eine Trennfuge (102) gestrichelt eingezeichnet, längs welcher der in der Zeichnung obere Teil des Gabelflansches (63) des Gehäuses (60) zur Bildung des Kopfteiles (100) abgetrennt werden kann. In diesem derart gebildeten Kopfteil (100) [vergl. Fig. 11 und Fig. 12] ist dann der dritte Gehäuse-Druckmittelanschluß (85) für den dritten Patronen-Druckmittelanschluß (82) enthalten.

Fig. 12 zeigt einen Schnitt durch einen Teil der Vorsteuereinheit (1) mit dem zuletzt erläuterten Aufbau längs den Ventilpatronen-Achsen zur Darstellung der Druckmittelanschlüsse für die Ventilpatrone (101), wobei die weitere Kanalführung angedeutet ist [die 3-fach-Magnetspuleneinheit (98) und die 3/2-Wege-Magnetventil-Patrone sind in der Darstellung nicht geschnitten dargestellt].

Mit der Bildung des Kopfteiles (100) sind neben der Änderung des Gabelflansches (63) auch an der 3/2-Wege-Magnetventil-Patrone (101) Veränderungen vorzunehmen. Die Ventilpatrone (101) ist, wie vorstehend erläutert, mit dem Kopfteil (100) verbunden; im Ausführungsbeispiel nach Fig. 12 ist diese Verbindung durch eine Bördelung (108) hergestellt. Mit dieser formschlüssigen Verbindung ist es erforderlich, auch den am dritten Patronen-Druckmittelanschluß (82) gebildeten Druckraum als solchen gegenüber der Atmosphäre abzudichten, wodurch neben den in Fig. 10 vorgesehenen drei Nut-Einstichen (95) zur Vormontage von dichtenden O-Ringen ein weiterer Nut-Einstich (106) für einen O-Ring zur Abdichtung des erläuterten Druckraumes gegenüber der Atmosphäre vorgesehen ist. Aus diesem Grund ist dann, zwischen der ersten (90) und der zweiten (91), jeweils als Schräge ausgeführten Ventilstufe, eine weitere als Schräge ausgeführte Ventilstufe (105) eingefügt.

Es ist vorteilhaft, die Kanalführung für die Verbindung der Gehäuse-Druckmittelanschlüsse der Magnetventil-Patronen (101, 103, 104) derart auszugestalten, daß die Mehrzahl der Kanalverbindungen in nur einer separaten Einheit ausgebildet ist; da im Kopfteil (100) nur ein Anschluß überhaupt, nämlich der dritte Gehäuse-Druckmittelanschluß (89) für die 3/2-Wege-Magnetventil-Patrone (101) vorgesehen ist, ist es vorteilhaft, diesen Anschluß über die in Fig. 12 gezeigte Kanalführung und über den im Falle des am Gehäuse (60) über die Fixiermittel (107) befestigten Kopfteiles (100) dichtenden O-Ringes (107) in das Gehäuse (60) weiterzuleiten. Damit bestehen nun im Gehäuse (60) Kanäle für alle Patronen-Druckmittelanschlüsse der Magnetventil-Patronen (101, 103, 104) der Vorsteuereinheit (1).

An dieser Stelle sei ergänzt, daß die Trennfuge (102) nach Fig. 10 auch in Richtung der Magnetspule (38) verschoben werden kann, so daß z. B. der erste Gehäuse-Druckmittelanschluß (83) dem Kopfteil (100) zugeschlagen wird. Bei einer solchen Lösung wäre die Kanalführung im Vergleich zu der unter Fig. 12 erläuterten Ausführung allerdings aufwendiger, da nun auch der erste Gehäuse-Druckmittelanschluß über eine dichtende Verbindung mit dem Gehäuse (60) verbunden werden müßte. Aus diesem Grund stellt die Auftrennung entlang der Trennfuge (102) nach Fig. 10 vom Standpunkt einer einfachen Kanalführung eine optimale Lösung dar.

Innerhalb des Gehäuses (60) werden nun Kanäle gebildet, die eine Verrohrung der Magnetventil-Patronen (101, 103, 104) entsprechend der pneumatischen Schaltung nach Fig. 2 darstellen. Die Kanalführung wird vorteilhafterweise derart ausgeführt, daß der erste pneumatische Eingang (4), der zweite pneumatische Eingang (5) und der pneumatische Ausgang (6) dieser aus der 3-fach-Ventilpatroneneinheit (99), der 3-fach-Magnetspuleneinheit (98) und dem Gehäuse (60) gebildeten Vorsteuereinheit (1) an einer geeigneten Stelle des Gehäuses (60) für die externe Verbindung herausgeführt werden.

Da die Vorsteuereinheit (1) entsprechend Fig. 2 direkt mit dem Relaisventil (2) verbunden ist, welches eine pneumatische Verbindung zur Druckversorgung aufweist, ist es vorteilhaft, den Versorgungsdruck-Eingang (4) und den pneumatischen Ausgang (6) an einer Stelle derart herauszuführen, daß an den pneumatischen Verbindungen (4) und (6) eine Luftübertragung zu den entsprechenden Druckkanälen in dem Relaisventil (2) herstellbar ist. Eine dichtende Verbindung zwischen Relaisventil (2) und Vorsteuereinheit (1), bei der die pneumatischen Anschlüsse (4) und (6) dichtend mit dem Relaisventil (2) verbunden sind, kann z. B. in der gleichen Weise erfolgen, wie der dritte Gehäuse-Druckmittelanschluß (85) über den O-Ring (107) mit dem Gehäuse (60) verbunden ist.

Zur Vervollständigung der pneumatischen Zuleitungen muß an die auf diese Weise gebildete Baueinheit aus Vorsteuereinheit (1) und Relaisventil (2) nur noch der Redundanzdruck an den zweiten pneumatischen Eingang (4) angeschlossen werden.

Neben der erläuterten Vorsteuereinheit, bei der entsprechend Fig. 11 eine 3-fach-Ventilpatroneneinheit (99) verwendet wird, welche auf der Fixierungs-Art einer Ventilpatrone entsprechend Fig. 5 beruht, läßt sich auch eine Vorsteuereinheit aufbauen, bei der eine 3-fach-Ventilpatroneneinheit vorgesehen ist, bei der die einzelnen Ventilpatronen entsprechend der Magnetspulen-Fixierung nach Fig. 6 ausgestaltet sind. Da in diesem Fall die Ventilpatronen die Form eines geraden Zylinders mit kreisrundem Querschnitt haben, entfällt bei einer derartigen Ausführungsform die Notwendigkeit, ein Kopfteil zu bilden, welches die einzelnen Ventilpatronen starr zusammenfaßt.

Statt dessen können bei einer Fixierung nach Fig. 6 die drei einzelnen Ventilpatronen durch z. B. eine federnde Spange in einer losen 3-fach-Ventilpatroneneineit zusammengehalten werden. Mit dem Einschieben und der Fixierung der einzelnen Ventilpatronen der 3-fach-Ventilpatroneneineit am Gehäuse (60) in der unter Fig. 6 dargestellten Art ist die Vorsteuereinheit fertiggestellt. Die Kanalführung zur Verbindung der Gehäuse-Druckmittelanschlüsse der Ventilpatronen kann in sinngemäß gleicher Weise, wie unter Fig. 12 erläutert, erfolgen.

## Patentansprüche

1. Ventileinrichtung, die mindestens ein Magnetventil mit folgenden Merkmalen aufweist:
a) Es ist als erste separate Baueinheit ein einteiliges Gehäuse (60) vorgesehen, bei dem durch eine quaderförmige. Ausnehmung (68) ein erster Gabelflansch (63) und ein zweiter Gabelflansch (64) gebildet ist;
b) im ersten Gabelflansch (63) ist eine erste Bohrung (65) und im zweiten Gabelflansch (64) ist eine zweite Sackbohrung (66) vorgesehen, wobei die Mittellinie der ersten Bohrung (65) koaxial mit der Mittellinie der zweiten Sackbohrung (66) verläuft;
c) es ist eine als zweite separate Baueinheit ausgebildete Magnetspule (61) vorgesehen, die über eine durch die Magnetspule (61) gehende Öffnung (69) in Form eines geraden Kreiszylinders verfügt;
d) die Magnetspule (61) ist derart ausgebildet, daß sie in der Gehäuse-Ausnehmung (68) positionierbar ist;
e) es ist eine als dritte separate Baueinheit ausgebildete Ventilpatrone (62) vorgesehen, die in Form eines Zylinders mit kreisrundem Querschnitt oder in Form eines geraden Stufenzylinders mit kreisrundem Querschnitt mit mindestens einer Stufe (71) aufgebaut ist;
f) die Ventilpatrone (62) ist derart ausgebildet, daß sie in das Gehäuse (60), beginnend an der ersten Bohrung (65) in Richtung der zweiten Sackbohrung (66), einsteckbar ist, so daß die in der Gehäuse-Ausnehmung (68) positionierte Magnetspule (61) nur noch in axialer Lage verschieblich ist;
g) an mindestens einem Gabelflansch (63 bzw. 64) ist mindestens ein Druckmittelanschluß (83, 85 bzw. 84) vorgesehen.

2. Ventileinrichtung nach Anspruch 1, **dadurch gekennzeichnet, daß** mit der Fixierung der eingesteckten Ventilpatrone (62) die axiale Lage der Magnetspule (61) fixiert ist.

3. Ventileinrichtung nach Anspruch 1, **dadurch gekennzeichnet, daß** die axiale Lage der Magnetspule (61) längs der eingesteckten Ventilpatrone (62) über weitere Mittel (53, 54) in Bezug auf ein weiteres Bauteil (55) fixiert ist.

4. Ventileinrichtung nach einem der Ansprüche 1 bis 3, **dadurch gekennzeichnet, daß** die Ventileinrichtung als Vorsteuereinheit (1) für einen Bremsdruckmodulator für mindestens einen Druckregelkreis einer elektronischen Bremsanlage vorgesehen ist.

5. Ventileinrichtung nach Anspruch 4, **dadurch gekennzeichnet, daß** die Vorsteuereinheit die folgenden Merkmale aufweist:
a) Es ist ein erster pneumatischer Eingang (4) vorgesehen, der mit dem Versorgungsdruck verbunden ist;
b) es ist ein zweiter pneumatischer Eingang (5) vorgesehen, der mit dem Ausgang einer Ventileinrichtung verbunden ist, die einen Redundanzdruck zur Verfügung stellt, welcher von dem Bremsdruck abgeleitet ist, der von dem Zugfahrzeug zu dem Anhänger über pneumatische Verbindungen übertragen ist;
c) es ist ein pneumatischer Ausgang (6) vorgesehen, der mit einer luftmengenverstärkenden Ventileinrichtung (2) verbunden ist;
d) die Vorsteuereinheit (1) ist aus elektrisch ansteuerbaren Ventileinrichtungen aufgebaut, deren pneumatische Anschlüsse (10, 11, 12, 13, 14, 15) in bestimmter Weise miteinander verschaltet sind und deren elektrische Anschlüsse (19) mit Ausgängen einer elektronischen Steuereinrichtung verbunden sind;
e) als Ventileinrichtungen sind drei als Ventilpatronen ausgebildete 2/2-Wege-Magnetventile (7, 8, 9) mit je einem ersten Anschluss (10, 12, 14) und einem zweiten Anschluß (11, 13, 15) vorgesehen.

6. Ventileinrichtung nach Anspruch 5, **dadurch gekennzeichnet, daß** die drei 2/2-Wege-Patronen-Magnetventile (7, 8, 9) parallel zueinander geschaltet sind.

7. Ventileinrichtung nach Anspruch 5 oder 6, **dadurch gekennzeichnet, daß** die 2/2-Wege-Patronen-Magnetventile (7, 8, 9) in taktender Betriebsweise zu betreiben sind.

8. Ventileinrichtung nach mindestens einem der Ansprüche 5 bis 7, **gekennzeichnet durch** die folgenden Merkmale:
a) Ein erstes stromlos geschlossenes 2/2-Wege-Patronen-Magnetventil (7) ist als Belüftungsventil für den Vorratsdruck vorgesehen;
b) ein zweites stromlos offenes 2/2-Wege-Patronen-Magnetventil (8) ist als Belüftungs-/Entlüftungsventil für den Redundanzdruck vorgesehen;
c) ein drittes stromlos geschlossenes 2/2-Wege-Patronen-Magnetventil (9) ist als Entlüftungsventil vorgesehen.

9. Ventileinrichtung nach Anspruch 8, **gekennzeichnet durch** die folgenden Merkmale:
a) Der erste pneumatische Eingang (4) ist mit dem ersten Anschluß (10) des ersten 2/2-Wege-Patronen-Magnetventiles (7) und der pneumatischen Ausgang (6) ist mit dem zweiten Anschluß (11) des ersten 2/2-Wege-Patronen-Magnetventiles (7) verbunden;
b) der zweite pneumatische Eingang (5) ist mit dem ersten Anschluß (12)des zweiten 2/2-Wege-Patronen-Magnetventiles (8) verbunden und der pneumatischen Ausgang (6) ist mit dem zweiten Anschluß (13) des zweiten 2/2-Wege-Patronen-Magnetventiles (8) verbunden;
c) der pneumatische Ausgang (6) ist mit dem ersten Anschluß (14) des dritten 2/2-Wege-Patronen-Magnetventiles (9) verbunden und der zweite Anschluß (15) des dritten 2/2-Wege-Patronen-Magnetventiles (9) ist mit einer Drucksenke (16) verbunden.

10. Ventileinrichtung nach Anspruch 4, **dadurch gekennzeichnet, daß** die Vorsteuereinheit die folgenden Merkmale aufweist:
a) Es ist ein erster pneumatischer Eingang (4) vorgesehen, der mit dem Versorgungsdruck verbunden ist;
b) es ist ein zweiter pneumatischer Eingang (5) vorgesehen, der mit dem Ausgang einer Ventileinrichtung verbunden ist, die einen Redundanzdruck zur Verfügung stellt, welcher von dem Bremsdruck abgeleitet ist, der von dem Zugfahrzeug zu dem Anhänger über pneumatische Verbindungen übertragen ist;
c) es ist ein pneumatischer Ausgang (6) vorgesehen, der mit einer luftmengenverstärkenden Ventileinrichtung (2) verbunden ist;
d) die Vorsteuereinheit (1) ist aus elektrisch ansteuerbaren Ventileinrichtungen aufgebaut, deren pneumatische Anschlüsse in bestimmter Weise miteinander verschaltet sind und deren elektrische Anschlüsse mit Ausgängen einer elektronischen Steuereinrichtung verbunden sind;
e) es ist als Ventileinrichtung erstens ein als Redundanzventil wirkendes 3/2-Wege-Patronen-Magnetventil (21) vorgesehen;
f) es ist als Ventileinrichtung zweitens ein stromlos offenes, als Belüftungsventil wirkendes 2/2-Wege-Patronen-Magnetventil (22) vorgesehen;
g) es ist als Ventileinrichtung drittens ein stromlos geschlossenes, als Entlüftungsventil wirkendes 2/2-Nege-Patronen-Magnetventil (23) vorgesehen.

11. Ventileinrichtung nach mindestens einem der vorstehenden Ansprüche **dadurch gekennzeichnet, daß** die Magnetspulen (28, 29, 30, 38) für die Patronen-Magnetventile (7, 8, 9, 21) als Mehrfach-Magnetspulen-Einheit (98) ausgeführt sind und die quaderförmige Ausnehmung (68) zur Aufnahme dieser Mehrfach-Magnetspulen-Einheit (98) ausgebildet ist.

12. Ventileinrichtung nach Anspruch 11, **dadurch gekennzeichnet, daß** die Mehrfach-Magnetspulen-Einheit (98) als kompakte, mit Kunststoff umspritzte Einbau-Einheit ausgebildet ist.

13. Ventileinrichtung nach mindestens einem der vorstehenden Ansprüche **dadurch gekennzeichnet, daß** eine die Patronen-Magnetventile (101, 103, 104) der Vorsteuereinheit (1) umfassende Mehrfach-Ventilpatronen-Einheit (99) vorgesehen ist.

14. Ventileinrichtung nach Anspruch 13, **dadurch gekennzeichnet, daß** für die Mehrfach-Ventilpatronen-Einheit (99) ein Kopfteil (100) vorgesehen ist, welches mit den einzelnen Patronen-Magnetventilen (101, 103, 104) verbunden ist.

15. Ventileinrichtung, bei der mindestens ein Magnetventil als eine als separates Teil ausgebildete Ventilpatrone (62) vorgesehen ist, wobei die das Magnetventil betätigende Magnetspule (38) ebenfalls aus einem separaten Teil besteht, und wobei die Ventilpatrone (62) die folgenden Merkmale aufweist:
a) die Ventilpatrone (62) besteht aus drei einzelnen zylindrischen Körpern, die in Richtung einer vorgegebenen Montagerichtung als erster, zweiter und dritter Zylinderkörper (75, 76, 77) bezeichnet sind, wobei die drei Zylinderkörper (75, 76, 77) als kreisrunde Zylinder oder kreisrunde Stufenzylinder ausgestaltet sind;
b) die Zylinderkörper (75, 76, 77) sind derart aneinander gereiht, daß der Zylinderdurchmesser in der Montagerichtung abnimmt oder höchstens gleich groß bleibt;
c) der erste Zylinderkörper (75) ist an seiner Trennstelle zu dem zweiten Zylinderkörper (76) mit diesem selbst, und der zweite Zylinderkörper (76) ist an seiner Trennstelle zu dem dritten Zylinderkörper (77) mit diesem selbst, jeweils nicht selbsttätig lösbar verbunden;
d) der erste und der zweite Zylinderkörper (75, 76) sind aus magnetisch nicht leitendem Material aufgebaut;
e) der dritte Zylinderkörper (77) ist aus ferromagnetischem Material aufgebaut;
f) der zweite Zylinderkörper (76) ist als Hohlkörper ausgebildet und enthält den Magnetanker (39) und die Anker-Rückstell-Einrichtung (40);
g) der Magnetanker (39) ist in dem zweiten Zylinderkörper (76) derart ausgerichtet, daß er bei stromloser Magnetspule (38) an der Begrenzung zum ersten Zylinderkörper (75) anliegt und diese Begrenzung eine erste Hubbegrenzung des Magnetankers (39) darstellt, welche durch die Wirkung der Anker-Rückstell-Einrichtung (40) eingenommen ist, und daß der Magnetanker (39) bei bestromter Magnetspule (38) an der Begrenzung zum dritten Zylinderkörper (77) zur Anlage kommt, wobei diese Begrenzung eine zweite Hubbegrenzung des Magnetankers (39) darstellt, welche durch die Wirkung der auf den Anker wirkenden Magnetkraft eingenommen ist;
h) der erste Zylinderkörper (75) ist an seiner Begrenzung zu dem zweiten Zylinderkörper (76) wahlweise mit einem Dichtsitz (31) oder einem Anker-Anschlag (32) ausgerüstet;
i) der dritte Zylinderkörper (77) ist an seiner Begrenzung zu dem zweiten Zylinderkörper (76) wahlweise mit einem Dichtsitz oder einem Anker-Anschlag ausgerüstet.

16. Ventileinrichtung nach Anspruch 15, **dadurch gekennzeichnet, daß** an der Ventilpatrone (62) in radialer Richtung Druckmittelanschlüsse (80, 82) angeordnet sind, deren Art und Anzahl durch die Art des Magnetventiles bestimmt sind.

17. Ventileinrichtung nach Anspruch 15 oder 16, **gekennzeichnet durch** die folgenden Merkmale:
a) Die Ventilpatrone (62) ist in drei Patronen-funktionsbereiche, einen ersten, einen zweiten und einen dritten Patronenbereich gegliedert;
b) der erste Patronenbereich erstreckt sich von dem ersten Zylinderkörper (75) bis in denjenigen Teil des zweiten Zylinderkörpers (76), der sich außerhalb des Wirkbereiches des magnetischen Eisenkreises befindet;
c) der zweite Patronenbereich erstreckt sich vom Wirkbereich des magnetischen Eisenkreises im zweiten Zylinderkörper (76) bis in denjenigen Teil des dritten Zylinderkörpers (77), der sich im Wirkbereich des magnetischen Eisenkreises befindet;
d) der dritte Patronenbereich stellt denjenigen Teil des dritten Zylinderkörpers (77) dar, der sich außerhalb des Wirkbereiches des magnetischen Eisenkreises befindet;
e) im ersten Patronenbereich ist mindestens ein Druckmittelanschluß (80, 82) vorgesehen;
f) in Abhängigkeit von der Art des Magnetventiles ist im dritten Patronenbereich ein weiterer Druckmittelanschluß (81) vorgesehen.

18. Ventileinrichtung nach Anspruch 17, **dadurch gekennzeichnet, daß** die axiale Lageausrichtung der Ventilpatrone (62) innerhalb eines als separate Baueinheit aufgebauten Gehäuses (60) durch den ersten und den dritten Patronenbereich bestimmt ist.

19. Ventileinrichtung nach mindestens einem der Ansprüche 15 bis 18, **gekennzeichnet durch** die folgenden Merkmale:
a) Der Magnetanker (39) ist an derjenigen Begrenzungsfläche, die an der ersten Hubbegrenzung zur Anlage kommt, mit einem Elastomer-Einsatz (41) zur Bildung des hermetisch dichtenden Ventilsitzes versehen;
b) der Magnetanker (39) ist an derjenigen Begrenzungsfläche, die an der zweiten Hubbegrenzung zur Anlage kommt, mit einer Ausformung (42) versehen, die zur Bildung eines nicht hermetisch dichtenden Metall-Metall-Ventilsitzes vorgesehen ist.

20. Ventileinrichtung nach mindestens einem der Ansprüche 15 bis 19, **dadurch gekennzeichnet, daß** sie für mindestens eine Ventileinrichtung in einer Vorsteuereinheit (1) für einen Bremsdruckmodulator für mindestens einen Druckregelkreis einer elektronischen Bremsanlage vorgesehen ist.

21. Ventileinrichtung nach Anspruch 20, **dadurch gekennzeichnet, daß** die Ventilpatrone (62) als 2/2-Wege-Patronen-Magnetventil ausgebildet ist.

22. Ventileinrichtung nach Anspruch 21, **dadurch gekennzeichnet, daß** die Ventilpatrone (62) als stromlos offenes Patronen-Magnetventil ausgebildet ist.

23. Ventileinrichtung nach Anspruch 21, **dadurch gekennzeichnet, daß** die Ventilpatrone (62) als stromlos geschlossenes Patronen-Magnetventil ausgebildet ist.

24. Ventileinrichtung nach Anspruch 20, **dadurch gekennzeichnet, daß** die Ventilpatrone (62) als 3/2-Wege-Patronen-Magnetventil ausgebildet ist.

25. Ventileinrichtung nach einem der Ansprüche 21 bis 24, **dadurch gekennzeichnet, daß** für eine Ausführung als 2/2-Wege-Patronen-Magnetventil oder für eine Ausführung als 3/2-Wege-Patronen-Magnetventil baugleiche Magnetanker (39) verwendet sind.

## Claims

1. Valve arrangement having at least one solenoid valve with the following features:
a) there is provided as a first separate structural unit a one-part housing (60) in which a first fork tine (63) and a second fork tine (64) are formed by a parallelepipedal recess (68);
b) a first bore (65) is provided in the first fork tine (63) and a second, blind bore (66) is provided in the second fork tine (64), the centre line of the first bore (65) extending coaxially with the centre line of the second, blind bore (66);
c) a magnetic coil (61), formed as a second separate structural unit, is provided which has an aperture (69) in the form of a right-circular cylinder passing through the magnetic coil (61);
d) the magnetic coil (61) is so formed that it is positionable in the housing recess (68);
e) a valve cartridge (62), formed as a third separate structural unit, is provided in the form of a cylinder having a circular cross-section or in the form of a right-circular stepped cylinder having a circular cross-section with at least one step (71);
f) the valve cartridge (62) is so formed that it can be inserted, commencing at the first bore (65) in the direction of the second, blind bore (66), into the housing (60), so that the magnetic coil (61) positioned in the housing recess (68) is displaceable in axial position only;
g) there is provided at least at one fork tine (63 or 64) at least one pressure medium connection point (83, 85; 84).

2. Valve arrangement according to claim 1, **characterised in that** the axial position of the magnetic coil (61) is fixed by the fixing of the inserted valve cartridge (62).

3. Valve arrangement according to claim 1, **characterised in that** the axial position of the magnetic coil (61) is fixed along the inserted valve cartridge (62) by way of further means (53, 54) in relation to a further component (55).

4. Valve arrangement according to any one of claims 1 to 3, **characterised in that** the valve arrangement is provided as a pilot control unit (1) for a brake pressure modulator for at least one pressure-regulating circuit of an electronic braking system.

5. Valve arrangement according to claim 4, **characterised in that** the pilot control unit has the following features:
a) a first pneumatic inlet (4) is provided which is connected to the supply pressure;
b) a second pneumatic inlet (5) is provided which is connected to the outlet of a valve device that has available a redundancy pressure, derived from the brake pressure, which is transmitted from the towing vehicle to the trailer by way of pneumatic connections;
c) a pneumatic outlet (6) is provided which is connected to an air-volume-increasing valve device (2);
d) the pilot control unit (1) is formed by electrically actuable valve devices, the pneumatic connection points (10, 11, 12, 13, 14, 15) of which are connected to one another in a predetermined manner and the electrical connection points (19) of which are connected to outlets of an electronic control device;
e) as valve devices there are provided three 2/2-way solenoid valves (7, 8, 9) in the form of valve cartridges, each having a first connection point (10, 12, 14) and a second connection point (11, 13, 15).

6. Valve arrangement according to claim 5, **characterised in that** the three 2/2-way cartridge solenoid valves (7, 8, 9) are connected in parallel to one another.

7. Valve arrangement according to claim 5 or 6, **characterised in that** the 2/2-way cartridge solenoid valves (7, 8, 9) are to be operated in a pulsed mode of operation.

8. Valve arrangement according to at least one of claims 5 to 7, **characterised by** the following features:
a) a first 2/2-way cartridge solenoid valve (7) which is closed in the de-energized state is provided as air-supply valve for the supply pressure;
b) a second 2/2-way cartridge solenoid valve (8) which is open in the de-energized state is provided as air-supply/air-removal valve for the redundancy pressure;
c) a third 2/2-way cartridge solenoid valve (9) which is closed in the de-energized state is provided as air-removal valve.

9. Valve arrangement according to claim 8, **characterised by** the following features:
a) the first pneumatic inlet (4) is connected to the first connection point (10) of the first 2/2-way cartridge solenoid valve (7) and the pneumatic outlet (6) is connected to the second connection point (11) of the first 2/2-way cartridge solenoid valve (7);
b) the second pneumatic inlet (5) is connected to the first connection point (12) of the second 2/2-way cartridge solenoid valve (8) and the pneumatic outlet (6) is connected to the second connection point (13) of the second 2/2-way cartridge solenoid valve (8);
c) the pneumatic outlet (6) is connected to the first connection point (14) of the third 2/2-way cartridge solenoid valve (9) and the second connection point (15) of the third 2/2-way cartridge solenoid valve (9) is connected to a pressure sink (16).

10. Valve arrangement according to claim 4, **characterised in that** the pilot control unit has the following features:
a) a first pneumatic inlet (4) is provided which is connected to the supply pressure;
b) a second pneumatic inlet (5) is provided which is connected to the outlet of a valve device that has available a redundancy pressure, derived from the brake pressure, which is transmitted from the towing vehicle to the trailer by way of pneumatic connections;
c) a pneumatic outlet (6) is provided which is connected to an air-volume increasing valve device (2);
d) the pilot control unit (1) is formed by electrically actuable valve devices, the pneumatic connection points of which are connected to one another in a predetermined manner and the electrical connection points of which are connected to outlets of an electronic control device;
e) there is provided as valve device firstly a 3/2-way cartridge solenoid valve (21) acting as redundancy valve;
f) there is provided as valve device secondly a 2/2-way cartridge solenoid valve (22) which is open in the de-energized state, which acts as air-supply valve;
g) there is provided as valve device thirdly a 2/2-way cartridge solenoid valve (23) which is closed in the de-energized state, which acts as air-removal valve.

11. Valve arrangement according to at least one of the preceding claims, **characterised in that** the magnetic coils (28, 29, 30, 38) for the cartridge solenoid valves (7, 8, 9, 21) are in the form of a multiple-magnetic-coil unit (98) and the parallelepipedal recess (68) is formed to receive that multiple-magnetic-coil unit (98).

12. Valve arrangement according to claim 11, **characterised in that** the multiple-magnetic-coil unit (98) is formed as a compact assembly unit spray-coated with plastics material.

13. Valve arrangement according to at least one of the preceding claims, **characterised in that** a multiple-valve-cartridge unit (99) comprising the cartridge solenoid valves (101, 103, 104) of the pilot control unit is provided.

14. Valve arrangement according to claim 13, **characterised in that** there is provided for the multiple-valve-cartridge unit (99) a head part (100) which is connected to the individual cartridge solenoid valves (101, 103, 104).

15. Valve arrangement, in which there is provided at least one solenoid valve in the form of a valve cartridge (62) formed as a separate component, the magnetic coil (38) actuating the solenoid valve likewise consisting of a separate component, and the valve cartridge (62) having the following features:
a) the valve cartridge (62) consists of three individual cylindrical bodies, which are indicated in the direction of a predetermined direction of assembly as a first, second and third cylindrical body (75, 76, 77), the three cylindrical bodies (75, 76, 77) being in the form of circular cylinders or circular stepped cylinders;
b) the cylindrical bodies (75, 76, 77) are so arranged in series with respect to one another that the cylinder diameter decreases in the direction of assembly, or at most remains the same size;
c) the first cylindrical body (75) is joined to the second cylindrical body (76) at its point of separation therefrom, and the second cylindrical body (76) is joined to the third cylindrical body (77) at its point of separation therefrom, none of those joins being able to self-release;
d) the first and the second cylindrical body (75, 76) are constructed from material that is not magnetically conductive;
e) the third cylindrical body (77) is constructed from ferromagnetic material;
f) the second cylindrical body (76) is formed as a hollow body and contains the armature (39) and the armature return means (40);
g) the armature (39) is so aligned in the second cylindrical body (76) that, when the magnetic coil (38) is de-energized, it is adjacent to the boundary of the first cylindrical body (75) and that boundary represents a first stroke limit stop for the armature (39), which is reached as a result of the action of the armature return means (40), and, when the magnetic coil (38) is energized, the armature (39) comes to rest against the boundary of the third cylindrical body (77), that boundary representing a second stroke limit stop for the armature (39), which is reached as a result of the action of the magnetic force acting on the armature;
h) the first cylindrical body (75) is fitted at its boundary with the second cylindrical body (76) with a sealing seat (31) or an armature stop, as desired;
i) the third cylindrical body (77) is fitted at its boundary with the second cylindrical body (76) with a sealing seat or an armature stop, as desired.

16. Valve arrangement according to claim 15, **characterised in that** arranged in radial direction on the valve cartridge (62) are pressure-medium connection points (80, 82), the nature and number of which are determined by the nature of the solenoid valve.

17. Valve arrangement according to claim 15 or 16, **characterised by** the following features:
a) the valve cartridge is divided into three cartridge function regions, a first, a second and a third cartridge region;
b) the first cartridge function region extends from the first cylindrical body (75) as far as into that portion of the second cylindrical body (76) located outside the working region of the magnetic iron circuit;
c) the second cartridge region extends from the working region of the magnetic iron circuit in the second cylindrical body (76) as far as into that portion of the third cylindrical body (77) located in the working region of the magnetic iron circuit;
d) the third cartridge region is that portion of the third third cylindrical body (77) located outside the working region of the magnetic iron circuit;
e) at least one pressure medium connection point (80, 82) is provided in the first cartridge region;
f) depending on the nature of the solenoid valve, a further pressure medium connection point (81) is provided in the third cartridge region.

18. Valve arrangement according to claim 17, **characterised in that** the axial position alignment of the valve cartridge (62) inside a housing (60) formed as a separate structural unit is determined by the first and the third cartridge region.

19. Valve arrangement according to at least one of claims 15 to 18, **characterised by** the following features:
a) at the boundary face that comes to bear against the first stroke limit stop, the armature (39) is provided with an elastomeric insert (41) for the formation of the hermetically sealing valve seat;
b) at the boundary face that comes to bear against the second stroke limit stop, the armature (39) is provided with a shaped portion (42) which is provided for the formation of a non-hermetically sealing metal-metal valve seat.

20. Valve arrangement according to at least one of claims 15 to 19, **characterised in that** it is provided for at least one valve device in a pilot control unit (1) for a brake pressure modulator for at least one brake-regulating circuit of an electronic braking system.

21. Valve arrangement according to claim 20, **characterised in that** the valve cartridge (62) is formed as a 2/2-way cartridge solenoid valve.

22. Valve arrangement according to claim 21, **characterised in that** the valve cartridge (62) is formed as a cartridge solenoid valve which is open in the de-energized state.

23. Valve arrangement according to claim 21, **characterised in that** the valve cartridge (62) is formed as a cartridge solenoid valve which is closed in the de-energized state.

24. Valve arrangement according to claim 20, **characterised in that** the valve cartridge (62) is formed as a 3/2-way cartridge solenoid valve.

25. Valve arrangement according to any one of claims 21 to 24, **characterised in that** for an arrangement as a 2/2-way cartridge solenoid valve or for an arrangement as a 3/2-way cartridge solenoid valve, structurally identical armatures (39) are employed.

## Revendications

1. Dispositif de valve qui comprend au moins une valve magnétique, présentant les éléments suivants :
a) à titre de première unité structurelle séparée est prévu un boîtier (60) d'un seul tenant dans lequel une première bride fourchue (63) et une seconde bride fourchue (64) sont formées par un évidement parallélépipédique (68) ;
b) dans la première bride fourchue (63) est prévu un premier perçage (65) et dans la seconde bride fourchue (64) et prévu un second perçage borgne (66), la ligne médiane du premier perçage (65) s'étendant coaxialement à la ligne médiane du second perçage borgne (66) ;
c) il est prévu une bobine magnétique (61) réalisée à titre de seconde unité structurelle séparée, qui dispose d'une ouverture (69) sous la forme d'un cylindre circulaire rectiligne traversant la bobine magnétique (61) ;
d) la bobine magnétique (61) est réalisée de manière à pouvoir être positionnée dans l'évidement (68) du boîtier ;
e) il est prévu une cartouche de valve (62) réalisée à titre de troisième unité structurelle séparée, qui est conçue sous la forme d'un cylindre de section transversale circulaire ou sous la forme d'un cylindre rectiligne en gradin de section transversale circulaire présentant au moins un gradin (71);
f) la cartouche de valve (62) est réalisée de manière à pouvoir être enfichée dans le boîtier (60) à partir du premier perçage (65) en direction du second perçage borgne (66), de sorte que la bobine magnétique (61) positionnée dans l'évidement (68) du boîtier n'est mobile plus que dans la position axiale ;
g) au moins un raccord à fluide sous pression (83, 85 ou 84) est prévu sur au moins une bride fourchue (63 ou 64).

2. Dispositif de valve selon la revendication 1, **caractérisé en ce que** la position axiale de la bobine magnétique (61) est fixée lors de la fixation de la cartouche de valve (62) enfichée.

3. Dispositif de valve selon la revendication 1, **caractérisé en ce que** la position axiale de la bobine magnétique (61) le long de la cartouche de valve (62) enfichée est fixée par rapport à un autre composant (55) par d'autres moyens (53, 54).

4. Dispositif de valve selon l'une des revendications 1 à 3, **caractérisé en ce que** le dispositif de valve est prévu à titre d'unité pilote (1) pour un modulateur de pression de freinage pour au moins un circuit de régulation de pression d'une installation de freinage électronique.

5. Dispositif de valve selon la revendication 4, **caractérisé en ce que** l'unité pilote présente les caractéristiques suivantes :
a) il est prévu une première entrée pneumatique (4) qui est en communication avec la pression d'alimentation ;
b) il est prévu une seconde entrée pneumatique (5) qui est en communication avec la sortie d'un dispositif de valve qui fournit une pression de redondance qui est dérivée de la pression de freinage qui est transmise du véhicule tracteur à la remorque via des liaisons pneumatiques ;
c) il est prévu une sortie pneumatique (6) qui est en communication avec un dispositif de valve (2) renforçant la quantité d'air ;
d) l'unité pilote (1) est réalisée par des dispositifs de valve commandés par voie électrique dont les raccords pneumatiques (10, 11, 12, 13, 14, 15) sont branchés les uns aux autres d'une manière déterminée et dont les connexions électriques (19) sont connectées à des sorties d'un dispositif de commande électronique ;
e) à titre de dispositifs de valve sont prévus trois valves magnétiques à 2 voies/2 positions (7, 8, 9) réalisées sous forme de cartouches de valve, comprenant chacune un premier raccord (10, 12, 14) et un second raccord (11, 13, 15).

6. Dispositif de valve selon la revendication 5, **caractérisé en ce que** les trois valves magnétiques à cartouche à 2 voies/2 positions (7, 8, 9) sont branchées parallèlement les unes aux autres.

7. Dispositif de valve selon l'une ou l'autre des revendications 5 et 6, **caractérisé en ce que** les valves magnétiques à cartouche à 2 voies/2 positions (7, 8, 9) fonctionnent par un mode de fonctionnement cadencé.

8. Dispositif de valve selon l'une des revendications 5 à 7, **caractérisé par** les caractéristiques suivantes :
a) une première valve magnétique à cartouche à 2 voies/2 positions (7) fermée à l'état sans courant est prévue à titre de valve de mise à l'air pour la pression de réserve ;
b) une seconde valve magnétique à cartouche à 2 voies/2 positions (8) ouverte à l'état sans courant est prévue à titre de valve de mise à l'air/purge pour la pression de redondance ;
c) une troisième valve magnétique à cartouche à 2 voies/2 positions (9) fermée à l'état sans courant est prévue à titre de valve de purge.

9. Dispositif de valve selon la revendication 8, **caractérisé par** les caractéristiques suivantes :
a) la première entrée pneumatique (4) est en communication avec le premier raccord (10) de la première valve magnétique à cartouche à 2 voies/2 positions (7) et la sortie pneumatique (6) est en communication avec le second raccord (11) de la première valve magnétique à cartouche à 2 voies/2 positions (7) ;
b) la seconde entrée pneumatique (5) est en communication avec le premier raccord (12) de la seconde valve magnétique à cartouche à 2 voies/2 positions (8) et la sortie pneumatique (6) est en communication avec le second raccord (13) de la seconde valve magnétique à cartouche à 2 voies/2 positions (9) ;
c) la sortie pneumatique (6) est en communication avec le premier raccord (14) de la troisième valve magnétique à cartouche à 2 voies/2 positions (9) et le second raccord (15) de la troisième valve magnétique à cartouche à 2 voies/2 positions (9) est en communication avec une bâche de pression (16).

10. Dispositif de valve selon la revendication 4, **caractérisé en ce que** l'unité pilote présente les caractéristiques suivantes :
a) il est prévu une première entrée pneumatique (4) qui est en communication avec la pression d'alimentation ;
b) il est prévu une seconde entrée pneumatique (5) qui est en communication avec la sortie d'un dispositif de valve qui fournit une pression de redondance qui est dérivée de la pression de freinage transmise du véhicule tracteur à la remorque via des liaisons pneumatiques ;
c) il est prévu une sortie pneumatique (6) qui est en communication avec un dispositif de valve (2) renforçant la quantité d'air ;
d) l'unité pilote (1) est réalisée par des dispositifs de valve commandés par voie électrique dont les raccords pneumatiques sont branchés les uns aux autres d'une manière déterminée et dont les connexions électriques sont connectées à des sorties d'un dispositif de commande électronique ;
e) à titre de dispositif de valve est prévu premièrement une valve magnétique à cartouche à 3 voies/2 positions (21) faisant office de valve de redondance ;
f) à titre de dispositif de valve est prévu deuxièmement une valve magnétique à cartouche à 2 voies/2 positions (22) ouverte dans l'état sans courant et faisant office de valve de mise à l'air ;
g) à titre de dispositif de valve est prévu troisièmement une valve magnétique à cartouche à 2 voies/2 positions (23) fermée dans l'état sans courant et faisant office de valve de purge.

11. Dispositif de valve selon l'une des revendications précédentes, **caractérisé en ce que** les bobines magnétiques (28, 29, 30, 38) pour les valves magnétiques à cartouche (7, 8, 9, 21) sont réalisées sous la forme d'une unité à bobines magnétiques multiples (98) et **en ce que** l'évidement parallélépipédique (68) est réalisé pour recevoir cette unité à bobines magnétiques multiples (98).

12. Dispositif de valve selon la revendication 11, **caractérisé en ce que** l'unité à bobines magnétiques multiples (98) est réalisée sous la forme d'une unité à intégrer compacte surmoulée de matière plastique.

13. Dispositif de valve selon l'une des revendications précédentes, **caractérisé en ce qu'**il est prévu une unité à cartouches de valve multiples (99) comprenant les valves magnétiques à cartouche (101, 103, 104) de l'unité pilote (1).

14. Dispositif de valve selon la revendication 13, **caractérisé en ce qu'**il est prévu pour l'unité à cartouches de valve multiples (99) une partie de tête (100) qui est reliée aux valves magnétiques à cartouche individuelles (101, 103, 104).

15. Dispositif de valve dans lequel au moins une valve magnétique est prévue à titre de cartouche de valve (62) réalisée comme pièce séparée, dans lequel la bobine magnétique (38) actionnant la valve magnétique est également constituée par une pièce séparée et la cartouche de valve (62) présente les caractéristiques suivantes :
a) la cartouche de valve (62) est constituée par trois corps cylindriques individuels qui sont désignés par premier, second et troisième corps cylindrique (75, 76, 77) dans le sens d'une direction de montage prédéterminée, les trois corps cylindriques (75, 76, 77) étant réalisés sous forme de cylindres circulaires ou de cylindres en gradin circulaires ;
b) les corps cylindriques (75, 76, 77) sont mis en rangée les uns contre les autres de telle sorte que le diamètre de cylindre diminue dans la direction de montage ou bien reste tout au plus constant ;
c) le premier corps cylindrique (75) est relié au second corps cylindrique (76) à son emplacement de séparation de celui-ci, et le second corps cylindrique (76) est relié au troisième corps cylindrique (77) à son emplacement de séparation de celui-ci, et ceci sans possibilité de détachement autonome ;
d) le premier et le second corps cylindrique (75, 76) sont réalisés en un matériau non conducteur sur le plan magnétique ;
e) le troisième corps cylindrique (77) est réalisé en un matériau ferromagnétique ;
f) le second corps cylindrique (76) est réalisé sous forme de corps creux et comprend l'induit magnétique (39) et le dispositif de rappel d'induit (40) ;
g) l'induit magnétique (39) est orienté de telle sorte dans le second corps cylindrique (76) que dans l'état sans courant de la bobine magnétique (38) il s'appuie contre la limitation vers le premier corps cylindrique (75) et que cette limitation représente une première limitation de course de l'induit magnétique (39), laquelle est occupée par l'effet du dispositif de rappel d'induit (40), et que dans l'état alimenté en courant de la bobine magnétique (38) l'induit magnétique (39) vient s'appuyer contre la limitation vers le troisième corps cylindrique (77), cette limitation représentant une seconde limitation de course de l'induit magnétique (39), laquelle est occupée par l'effet de la force magnétique agissant sur l'induit ;
h) le premier corps cylindrique (75) est muni au choix d'un siège étanche (31) ou d'une butée d'induit (32), au niveau de sa limitation vers le second corps cylindrique (76) ;
i) le troisième corps cylindrique (77) est muni au choix d'un siège étanche ou d'une butée d'induit, au niveau de sa limitation vers le second corps cylindrique (76).

16. Dispositif de valve selon la revendication 15, **caractérisé en ce qu'**il est prévu sur la cartouche de valve (62), en direction radiale, des raccords à fluide sous pression (80, 82) dont le type et le nombre sont déterminés par le type de valve magnétique.

17. Dispositif de valve selon l'une ou l'autre des revendications 15 et 16, **caractérisé par** les caractéristiques suivantes :
a) la cartouche de valve (62) est subdivisée en trois zones de cartouche fonctionnelles que sont une première, une seconde et une troisième zone de cartouche ;
b) la première zone de cartouche s'étend depuis le premier corps cylindrique (75) jusque dans cette partie du second corps cylindrique (76) qui est située à l'extérieur de la plage d'action du circuit magnétique ;
c) la seconde zone de cartouche s'étend depuis la plage d'action du circuit magnétique dans le second corps cylindrique (76) jusque dans cette partie du troisième corps cylindrique (77) qui est située dans la plage d'action du circuit magnétique ;
d) la troisième zone de cartouche représente cette partie du troisième corps cylindrique (77) qui est située à l'extérieur de la plage d'action du circuit magnétique ;
e) dans la première zone de cartouche est prévu au moins un raccord à fluide sous pression (80, 82) ;
f) en fonction du type de valve magnétique, un autre raccord à fluide sous pression (81) est prévu dans la troisième zone de cartouche.

18. Dispositif de valve selon la revendication 17, **caractérisé en ce que** l'orientation axiale de la position de la cartouche de valve (62) à l'intérieur d'un boîtier (60) conçu comme unité structurelle séparée est déterminée par la première et par la troisième zone de cartouche.

19. Dispositif de valve selon l'une des revendications 15 à 18, **caractérisé par** les caractéristiques suivantes:
a) sur celle des surfaces de limitation qui vient en appui contre la première limitation de course, l'induit magnétique (39) est pourvu d'un insert élastomère (41) pour former le siège de valve à étanchéité hermétique ;
b) sur celle des surfaces de limitation qui vient en appui contre la seconde limitation de course, l'induit magnétique (39) est pourvu d'une conformation (42) qui est prévue pour former un siège de valve métal-métal à étanchéité non hermétique.

20. Dispositif de valve selon l'une des revendications 15 à 19, **caractérisé en ce que** celui-ci est prévu pour au moins un dispositif de valve dans une unité pilote (1) pour un modulateur de pression de freinage pour au moins un circuit de régulation de pression d'une installation de freinage électronique.

21. Dispositif de valve selon la revendication 20, **caractérisé en ce que** la cartouche de valve (62) est réalisée sous la forme d'une valve magnétique à cartouche à 2 voies/2 positions.

22. Dispositif de valve selon la revendication 21, **caractérisé en ce que** la cartouche de valve (62) est réalisée sous la forme d'une valve magnétique à cartouche ouverte dans l'état sans courant.

23. Dispositif de valve selon la revendication 21, **caractérisé en ce que** la cartouche de valve (62) est réalisée sous la forme d'une valve magnétique à cartouche fermée dans l'état sans courant.

24. Dispositif de valve selon la revendication 20, **caractérisé en ce que** la cartouche de valve (62) est réalisée sous la forme d'une valve magnétique à cartouche à 3 voies/2 positions.

25. Dispositif de valve selon l'une des revendications 21 à 24, **caractérisé en ce que** des induits magnétiques (39) de construction identique sont utilisés pour une réalisation sous forme de valve magnétique à cartouche à 2 voies/2 positions ou pour une réalisation sous forme de valve magnétique à cartouche à 3 voies/2 positions.
